# EUROPEAN PATENT SPECIFICATION

(11) **EP 4 337 973 B1**
(45) Date of publication and mention of the grant of the patent: **26.11.2025**
(21) Application number: 22715305.3
(22) Date of filing: 21.03.2022
(51) Int. Cl.: G01S 19/48, G01S 19/39, G01S 19/42

(54) **DETERMINING POSITION INFORMATION OF MOBILE DEVICES**
BESTIMMUNG VON POSITIONSINFORMATIONEN MOBILER VORRICHTUNGEN
DÉTERMINATION D'INFORMATIONS POSITIONNELLES DE DISPOSITIFS MOBILES

(30) Priority: 10.05.2021 US 202117315527
(43) Date of publication of application: 20.03.2024
(73) Proprietor: QUALCOMM INCORPORATED, San Diego, California 92121-1714 (US)
(72) Inventor: PENG, Yuxiang, San Diego, CA 92121-1714 (US); WANG, Min, San Diego, CA 92121-1714 (US); LUO, Ning, San Diego, CA 92121-1714 (US); ZHANG, Gengsheng, San Diego, CA 92121-1714 (US)
(74) Representative: Reddie & Grose LLP
(86) International application number: PCT/US2022/071239
(87) International publication number: WO 2022/241346

(56) References cited:
- US-A1- 2003 004 640
- US-A1- 2014 038 637
- WEN WEISONG ET AL: "Object-Detection-Aided GNSS and Its Integration With Lidar in Highly Urbanized Areas", IEEE INTELLIGENT TRANSPORTATION SYSTEMS MAGAZINE, IEEE, USA, vol. 12, no. 3, 9 June 2020 (2020-06-09), pages 53 - 69, XP011800070, ISSN: 1939-1390, [retrieved on 20200721], DOI: 10.1109/MITS.2020.2994131
- CHI CHENG ET AL: "Exploiting sequential dilution of precision for a general framework of PPP convergence period evaluation", ADVANCES IN SPACE RESEARCH, ELSEVIER, AMSTERDAM, NL, vol. 68, no. 6, 5 May 2021 (2021-05-05), pages 2383 - 2400, XP086710460, ISSN: 0273-1177, [retrieved on 20210505], DOI: 10.1016/J.ASR.2021.04.033

## Description

### BACKGROUND

### Field of Invention

The present invention relates generally to the field of wireless communications, and more specifically to determining position information of mobile devices.

### Description of Related Art

With the proliferation of mobile devices, identifying precise positioning information (e.g., to centimeter-level accuracy) has become increasingly desired. Various techniques, such as Precise Point Positioning (PPP) and Real Time Kinematics (RTK), may be used for identifying precise positioning information. However, these techniques may have various drawbacks. For example, conventional PPP techniques may take a long time to converge. As another example, RTK may use a relatively large amount of data.

In US 2003/0004640 A1, there are described techniques for providing an improved position estimate for a device in instances of relatively large dilution of precision. In a method, position estimates for a number of transmitters (e.g., GPS satellites and/or base stations) and a set of initial measurements (e.g., pseudo-ranges) are initially received. An Update Vector for a current device position estimate is computed. Non-convergence of the current device position estimate toward a target position estimate is detected and, if true, the Update Vector is adjusted (e.g., reduced in magnitude by a scaling factor) to increase the likelihood of convergence to the target position estimate. The current device position estimate is then updated based on the (possibly adjusted) Update Vector. Non-convergence may be detected based on the number of iterations performed without reaching the target position estimate and/or phase reversal in two consecutive Update Vectors. The scaling factor may be increased with each detected event indicative of non-convergence.

In US 2014/0038637 A1 a method and apparatus is described to utilize a position location measurements to improve the accuracy of an initial position estimate for a wireless terminal. These measurements may be either partial set of measurements or a "complete" set of measurements. A partial measurement set includes measurements that are available but not in sufficient number to produce an independent position fix for the terminal with a predetermined quality of service (i.e., predetermined accuracy). However, instead of discarding these measurements, as is normally done, they are used to derive a revised position estimate for the terminal having improved accuracy over the initial position estimate. In another method and apparatus, an initial position estimate is improved by using a complete set of measurements. A complete set of measurements is a set of measurements from which it is possible to derive a position location solution with a sufficiently high quality of service, but which can nonetheless be improved by the method and apparatus.

In the article titled "Exploiting sequential dilution of precision for a general framework of PPP convergence period evaluation" of Cheng Chi et al (Advances in Space Research, Volume 68, Issue 6, 2021, Pages 2383-2400), the authors state that the convergence period is of critical significance in Precise Point Positioning (PPP) applications. The authors state a current criterion for determining PPP convergence period is by comparing the positioning error to the ground truth and that this experiment-based criterion can be influenced by many factors like the accuracy of ephemeris and the test area. The authors state one can hardly get a consistent result of the convergence period without abundant experiments and that consequently, the criterion is not suitable for global-wide PPP specification determination and relevant GNSS service design. The authors have reportedly built a new framework of PPP convergence period evaluation based on statistical analysis, with the definition of an indicator, Sequential Dilution of Precision (SDOP). The SDOP represents the propagation from measurement errors to the filter-derived positioning errors. And the framework is established based on SDOP to connect the measurement error, confidential probability, and PPP convergence period.

In the article titled "Object-Detection-Aided GNSS and Its Integration With Lidar in Highly Urbanized Areas" of Wen et al (IEEE Intelligent Transportation Systems Magazine, vol. 12, no. 3, pp. 53-69, 2020), the authors state that positioning is a key function for autonomous vehicles that requires globally referenced localization information. Lidar-based mapping, which refers to simultaneous localization and mapping (SLAM), provides continuous positioning in diverse scenarios. However, SLAM error can accumulate through time. Besides, only relative positioning is provided by SLAM. The Global Navigation Satellite System (GNSS) receiver is one of the significant sensors for providing globally referenced localization, and it is usually integrated with lidar in autonomous driving. The authors report that the performance of the GNSS is severely challenged due to the reflection and blockage caused by buildings in superurbanized cities, resulting in the notorious non-line-of-sight (NLOS) receptions. Moreover, the authors report that the uncertainty of the GNSS positioning is ambiguous, leading to the incorrect tuning of its weight during GNSS-lidar integration. The authors employ lidar to identify the NLOS measurement of the GNSS receiver using pointcloud-based object detection. Measurements from satellites suffering from NLOS reception will be excluded based on the proposed fault detection and exclusion (FDE) algorithm. Then, GNSS-weight least-square positioning is conducted based on the surviving measurements from FDE. The noise covariance of the GNSS positioning is calculated by considering the potential location errors caused by the NLOS and the remaining LOS measurements. The improved GNSS result and its corresponding noise covariance are integrated with lidar through a graph-based SLAM-integration framework.

### BRIEF SUMMARY

The invention is defined by the independent claims.

Features of some embodiments are recited in dependent claims.

### BRIEF DESCRIPTION OF THE DRAWINGS

FIG. 1 is a diagram of a positioning system, according to an embodiment.
FIG. 2 is a block diagram of a positioning system, according to an embodiment.
FIG. 3 is a flow diagram for determining positioning information, according to an embodiment.
FIG. 4 is an information flow diagram for determining positioning information, according to an embodiment.
FIG. 5 is a flow diagram for determining positioning information based on camera data, according to an embodiment.
FIG. 6 is a flow diagram for determining positioning information, according to an embodiment.
FIG. 7 is a block diagram of an embodiment of a mobile device, which can be utilized in embodiments as described herein.

Like reference symbols in the various drawings indicate like elements, in accordance with certain example implementations.

### DETAILED DESCRIPTION

The following description is directed to certain implementations for the purposes of describing the innovative aspects of this disclosure. However, a person having ordinary skill in the art will readily recognize that the teachings herein can be applied in a multitude of different ways. The described implementations may be implemented in any device, system, or network that is capable of transmitting and receiving radio frequency (RF) signals according to any communication standard, such as any of the Institute of Electrical and Electronics Engineers (IEEE) IEEE 802.11 standards (including those identified as WiFi^{®} technologies), the Bluetooth^{®} standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (WCDMA), Evolution Data Optimized (EV-DO), 1xEV-DO, EV-DO Rev A, EV-DO Rev B, High Rate Packet Data (HRPD), High Speed Packet Access (HSPA), High Speed Downlink Packet Access (HSDPA), High Speed Uplink Packet Access (HSUPA), Evolved High Speed Packet Access (HSPA+), Long Term Evolution (LTE), Advanced Mobile Phone System (AMPS), or other known signals that are used to communicate within a wireless, cellular or internet of things (IoT) network, such as a system utilizing Third Generation (3G), Fourth Generation (4G), Fifth Generation (5G), Sixth Generation (6G), or further implementations thereof, technology.

As used herein, an "RF signal" comprises an electromagnetic wave that transports information through the space between a transmitter (or transmitting device) and a receiver (or receiving device). As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal.

As used herein, a "mobile device" may refer to various types of electronic or computing devices, such as mobile or cellular phones, wearable computers (e.g., a fitness tracker, a virtual reality or augmented reality headset, etc.), tablet computers, laptop computers, vehicle computing devices (e.g., computing devices of an autonomous or semi-autonomous vehicle, devices associated with vehicle entertainment or navigation systems, etc.), and the like. The techniques described herein relate to determining location data of a mobile device, that indicates, for example, a current location of the mobile device.

As used herein, a "position source device" may refer to a device that provides location information and/or position information to a mobile device. Examples of position source devices include: cellular base stations (e.g., LTE cells and/or base stations, 5G cells and/or base stations, and the like), wireless network base stations that provide RTK data, IoT devices (e.g., smart traffic cameras, smart security cameras, smart motion sensors, etc.), WiFi Access Points (APs), wireless beacon devices, RF sensing devices, Ultra-Wide Bandwidth (UWB) devices configured to perform ranging, third-party devices that interact with mobile applications executing on a mobile device (e.g., a scanning device associated with a toll booth that scans an E-Z pass tag, an electronic payment device in a store that scans information presented on the mobile device, etc.), and the like.

As used herein, a "Precise Point Positioning (PPP) engine" refers to one or more components (e.g., software components or modules) that perform PPP techniques to determine location data of a mobile device. PPP generally uses a network of global base stations to determine Global Navigation Satellite System (GNSS) satellite orbit and clock corrections and transmit them to a "rover station" (e.g., a mobile device).

A PPP engine may use various Bayesian estimators to determine the one or more PPP positions of a mobile device. Examples of Bayesian estimators that may be used include a Kalman Filter, an Extended Kalman Filter, an Unscented Kalman Filter, a particle filter, or the like. It should be noted that, as used herein, "Kalman Filter" is intended to refer to various types of Kalman Filters, such as an Extended Kalman Filter, an Unscented Kalman Filter, or the like. In some embodiments, an estimator may be used to iteratively determine states which corresponded to a predicted device location over a series of time steps. Continuing with this example, the Bayesian estimator may be iteratively updated (e.g., states of the estimator may be iteratively updated) to identify a solution. The solution of the estimator may correspond to a PPP position of a mobile device at a time point at which the estimator has converged.

It should be noted that a PPP engine as used herein may be implemented as one or more modules. For example, in some embodiments, a PPP engine may be implemented as two or more modules. As a more particular example, in some embodiments, a first module may receive position information and perform various preprocessing techniques on the position information. Continuing with this more particular example, in some embodiments, a second module may correspond to a Bayesian estimator that estimates one or more PPP positions based on the position information. Conversely, in some embodiments, a PPP engine may be implemented as one module. It should be understood that the methods, systems, apparatuses, media, and techniques described herein may be implemented using any suitable number of modules or engines.

As used herein, "Real Time Kinematics (RTK)" generally refers to another GNSS-based positioning technique that may be used to determine a location of a mobile device. In general, RTK uses carrier-based ranging by determining the number of carrier cycles between a satellite and mobile device (e.g., carrier phase measurements, including changes in phase and the number of cycles of the carrier signals).

Conventional PPP may generally use GNSS data to obtain PPP location data. Conventional PPP techniques may use a Kalman Filter or an Extended Kalman Filter that utilizes GNSS data to determine location data by iteratively updating a predicted location until it is determined that the Kalman Filter or the Extended Kalman Filter has converged. Conventional PPP techniques may require a relatively long time period to reach convergence, for example, on the order of 20-40 minutes to reach an accuracy of less than 10 centimeters.

The techniques described herein allow a PPP position to meet or be below a convergence threshold more rapidly than a PPP position identified using conventional PPP techniques. In particular, one or more PPP positions of a mobile device may be determined based on additional precise position information. In particular, a mobile device may receive position information from one or more position source devices. The position information may indicate an absolute location of the one or more position source devices and/or a relative position of the mobile device relative to the one or more position source devices. The position information may be GNSS-based (e.g., RTK data) or non-GNSS-based (e.g., from IoT devices, from position information determined by the mobile device itself, from a wireless base station, from wireless beacon devices, from RF sensing devices, from LIDAR devices, from RF sensing devices, from UWB devices capable of performing ranging, etc.). Examples of UWB devices include smart mobile phones, smart watches, smart keys or fobs, and the like.

By providing the position information to the mobile device for use in determining the one or more PPP positions, the mobile device may effectively benefit from access to additional location data or position data (e.g., additional relative to multi-constellation, multi-band data traditionally utilized in PPP) that can be used to constrain a location of the mobile device during determination of the one or more PPP positions. By utilizing additional position information that constrains the location of the mobile device, the one or more PPP positions may be determined more rapidly than would be determined using conventional PPP techniques.

The techniques described herein may be used in a variety of applications. For example, in an instance in which PPP position data is desired for a vehicle, it may be difficult to determine PPP position data in certain environments, such as when a car exits a tunnel, due to poor GNSS coverage. In some embodiments, in such a scenario, position information may be obtained by a mobile device associated with the vehicle. The position information may be obtained from various position source devices, wireless base stations (e.g., 4G/LTE wireless base stations, 5G wireless base stations, wireless base stations that provide RTK data, and the like), LIDAR devices, RF sensing devices, IoT devices, UWB devices, and/or one or more devices associated with a road the vehicle is traveling on and/or a toll booth the vehicle passes through. For example, position information may be obtained from a traffic camera or toll both camera that captures an image of a portion of the vehicle. As a more particular example, a device associated with the traffic camera or the toll booth camera may transmit a message to a mobile device associated with the vehicle indicating detection of the vehicle and/or any position information (e.g., an absolute location of the camera, a field of view of the camera, a relative position of the vehicle relative to the camera, etc.). As another example, position information may be obtained from a scanning device that scans an E-Z pass tag. As a more particular example, the scanning device may transmit a message to the mobile device (e.g., to a mobile application executing on the mobile device) that indicates that the E-Z pass tag has been scanned and/or any position information (e.g., a location of the scanning device).

As another example, it may be difficult to determine PPP position data in an instance in which a mobile device transitions from an indoor environment to an outdoor environment due to poor GNSS coverage in the indoor environment. In such cases, position information may be obtained by a mobile device based on one or more position source devices accessible in the indoor environment. Examples of such one or more position source devices may include various IoT devices positioned in the indoor environment, various wireless (e.g., Bluetooth^{®}) beacons that broadcast messages that may be detected by the mobile device, various RF sensing devices, various UWB devices that perform ranging techniques, various WiFi APs, and the like. In some embodiments, one or more initial PPP positions of the mobile device may be determined using the position information from the one or more position source devices accessible in the indoor environment, thereby allowing the one or more PPP positions to be more rapidly determined once the mobile device enters the outdoor environment (and therefore, when better GNSS coverage is available).

In some embodiments, a determination of whether to use position information to determine one or more PPP positions of a mobile device may be made based on an uncertainty of the position information. For example, the position information may be used in response to determining that an uncertainty of the position information meets or is below a threshold.

It should be noted that PPP may be enabled on a mobile device at an application level. Accordingly, determinations of whether to request position information to determine one or more PPP positions of a mobile device may be made by a particular application executing on the mobile device and/or based on user configuration settings associated with the particular application. For example, in some embodiments, a navigation application may be set, by default, to not use PPP positioning. Continuing with this example, in some embodiments, the navigation application may request position information to determine one or more PPP positions in response to user configuration settings associated with the navigation application indicating that PPP positioning is to be used. In some embodiments, the application may determine a desired accuracy level or threshold of position uncertainty associated with requested position information in order to use requested position information to determine the one or more PPP positions. For example, the threshold may be determined based on application type. Moreover, in some embodiments, the application may determine when position information is requested. For example, in some embodiments, in an instance in which the mobile device is determined to be in a vehicle or approaching a vehicle, the application may request position information as the mobile device is in the vehicle or approaching the vehicle and prior to the vehicle being in motion (e.g., so that accurate PPP positions are available in a navigation application prior to the vehicle being in motion). As another example, in some embodiments, in an instance in which the mobile device corresponds to a Virtual Reality (VR) or Augmented Reality (AR) headset, the application may request the position information in response to the headset being turned on or activated.

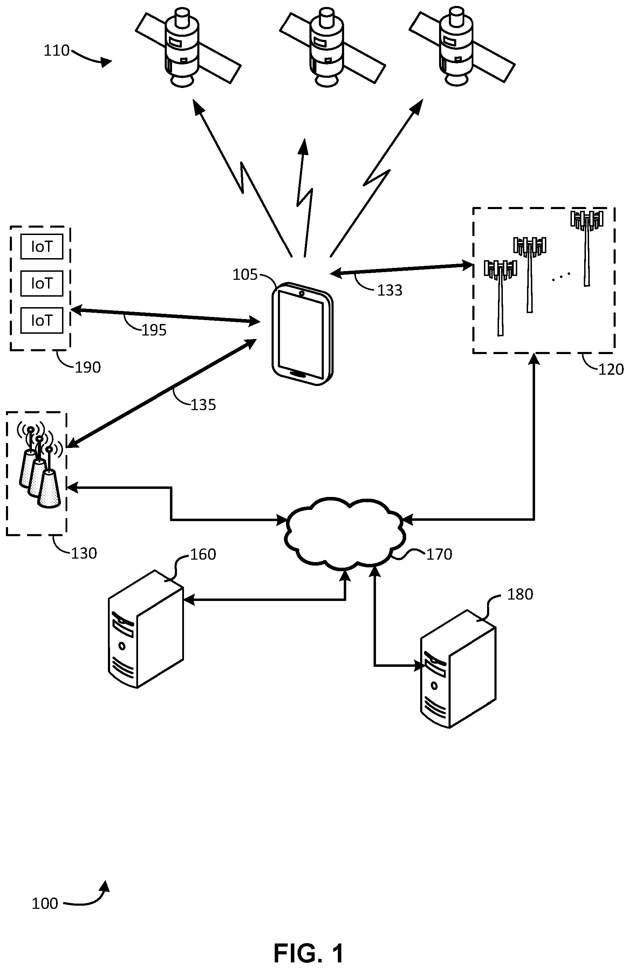

**FIG. 1** is a simplified illustration of a positioning system 100 in which a mobile device 105, location server (LS) 160, and/or other components of the positioning system 100 can use the techniques provided herein for determining and estimated location of mobile device 105, according to an embodiment. The techniques described herein may be implemented by one or more components of the positioning system 100. The positioning system 100 can include a mobile device 105, one or more GNSS satellites 110 (also referred to as space vehicles (SVs)) for a GNSS such as the Global Positioning System (GPS), base stations 120, APs 130, LS 160, network 170, external client 180, and/or one or more IoT devices 190. Generally put, the positioning system 100 can estimate a location of the mobile device 105 based on RF signals received by and/or sent from the mobile device 105 and known locations of other components (e.g., GNSS satellites 110, base stations 120, APs 130, and/or IoT devices 190) transmitting and/or receiving the RF signals..

It should be noted that FIG. 1 provides only a generalized illustration of various components, any or all of which may be utilized as appropriate, and each of which may be duplicated as necessary. Specifically, although only one mobile device 105 is illustrated, it will be understood that many mobile devices (e.g., hundreds, thousands, millions, etc.) may utilize the positioning system 100. Similarly, the positioning system 100 may include a larger or smaller number of base stations 120 and/or APs 130 than illustrated in FIG. 1. The illustrated connections that connect the various components in the positioning system 100 comprise data and signaling connections which may include additional (intermediary) components, direct or indirect physical and/or wireless connections, and/or additional networks. Furthermore, components may be rearranged, combined, separated, substituted, and/or omitted, depending on desired functionality. In some embodiments, for example, the external client 180 may be directly connected to LS 160. A person of ordinary skill in the art will recognize many modifications to the components illustrated.

Depending on desired functionality, the network 170 may comprise any of a variety of wireless and/or wireline networks. The network 170 can, for example, comprise any combination of public and/or private networks, local and/or wide-area networks, and the like. Furthermore, the network 170 may utilize one or more wired and/or wireless communication technologies. In some embodiments, the network 170 may comprise a cellular or other mobile network, a wireless local area network (WLAN), a wireless wide-area network (WWAN), and/or the Internet, for example. Examples of network 170 include an LTE wireless network, a 5G wireless network (also referred to as New Radio (NR) wireless network or 5G NR wireless network), a WiFi WLAN, and the Internet. LTE, 5G and NR are wireless technologies defined, or being defined, by the 3rd Generation Partnership Project (3GPP). Network 170 may also include more than one network and/or more than one type of network.

The base stations 120 and APs 130 are communicatively coupled to the network 170. In some embodiments, the base station 120s may be owned, maintained, and/or operated by a cellular network provider, and may employ any of a variety of wireless technologies, as described herein below. Depending on the technology of the network 170, a base station 120 may comprise a node B, an Evolved Node B (eNodeB or eNB), a base transceiver station (BTS), a radio base station (RBS), an NR NodeB (gNB), a Next Generation eNB (ng-eNB), or the like. A base station 120 that is a gNB or ng-eNB may be part of a Next Generation Radio Access Network (NG-RAN) which may connect to a 5G Core Network (5GC) in the case that Network 170 is a 5G network. An AP 130 may comprise a WiFi AP or a Bluetooth^{®} AP, for example. Thus, mobile device 105 can send and receive information with network-connected devices, such as LS 160 and/or IoT devices 190, by accessing the network 170 via a base station 120 using a first communication link 133. Additionally or alternatively, because APs 130 also may be communicatively coupled with the network 170, mobile device 105 may communicate with Internet-connected devices, including LS 160, using a second communication link 135. In some embodiments, mobile device 105 may communicate with IoT devices 190 using a third communication link 195.

As used herein, the term "base station" may generically refer to a single physical transmission point, or multiple co-located physical transmission points, which may be located at a base station 120. A Transmission Reception Point (TRP) (also known as transmit/receive point) corresponds to this type of transmission point, and the term "TRP" may be used interchangeably herein with the terms "gNB," "ng-eNB," and "base station." Physical transmission points may comprise an array of antennas (e.g., as in a Multiple Input-Multiple Output (MIMO) system and/or where the base station employs beamforming) of the base station. The term "base station" may additionally refer to multiple non-co-located physical transmission points, the physical transmission points may be a Distributed Antenna System (DAS) (a network of spatially separated antennas connected to a common source via a transport medium) or a Remote Radio Head (RRH) (a remote base station connected to a serving base station). Alternatively, the non-co-located physical transmission points may be the serving base station receiving the measurement report from the mobile device 105 and a neighbor base station whose reference RF signals the mobile device 105 is measuring.

As used herein, the term "cell" may generically refer to a logical communication entity used for communication with a base station 120, and may be associated with an identifier for distinguishing neighboring cells (e.g., a Physical Cell Identifier (PCID), a Virtual Cell Identifier (VCID)) operating via the same or a different carrier. In some examples, a carrier may support multiple cells, and different cells may be configured according to different protocol types (e.g., Machine-Type Communication (MTC), Narrowband Internet-of-Things (NB-IoT), Enhanced Mobile Broadband (eMBB), or others) that may provide access for different types of devices. In some cases, the term "cell" may refer to a portion of a geographic coverage area (e.g., a sector) over which the logical entity operates.

The LS 160 may comprise a server and/or other computing device configured to determine an estimated location of mobile device 105 and/or provide data (e.g., "assistance data") to mobile device 105 to facilitate the location determination. According to some embodiments, LS 160 may comprise a Home Secure User Plane Location (SUPL) Location Platform (H-SLP), which may support the SUPL user plane (UP) location solution defined by the Open Mobile Alliance (OMA) and may support location services for mobile device 105 based on subscription information for mobile device 105 stored in LS 160. In some embodiments, the LS 160 may comprise, a Discovered SLP (D-SLP) or an Emergency SLP (E-SLP). The LS 160 may also comprise an Enhanced Serving Mobile Location Center (E-SMLC) that supports location of mobile device 105 using a control plane (CP) location solution for LTE radio access by mobile device 105. The LS 160 may further comprise a Location Management Function (LMF) that supports location of mobile device 105 using a control plane (CP) location solution for NR radio access by mobile device 105. In a CP location solution, signaling to control and manage the location of mobile device 105 may be exchanged between elements of network 170 and with mobile device 105 using existing network interfaces and protocols and as signaling from the perspective of network 170. In a UP location solution, signaling to control and manage the location of mobile device 105 may be exchanged between LS 160 and mobile device 105 as data (e.g. data transported using the Internet Protocol (IP) and/or Transmission Control Protocol (TCP)) from the perspective of network 170.

As previously noted (and discussed in more detail below), the estimated location of mobile device 105 may be based on measurements of RF signals sent from and/or received by the mobile device 105. In particular, these measurements can provide information regarding the relative distance and/or angle of the mobile device 105 from one or more components in the positioning system 100 (e.g., GNSS satellites 110, APs 130, base stations 120). The estimated location of the mobile device 105 can be estimated geometrically (e.g., using multiangulation and/or multilateration), based on the distance and/or angle measurements, along with known position of the one or more components.

Although terrestrial components such as APs 130 and base stations 120 may be fixed, embodiments are not so limited. Mobile components may be used. Moreover, in some embodiments, location of the mobile device 105 estimated at least in part based on measurements of RF signals communicated between the mobile device 105 and one or more other mobile devices (not shown in FIG. 1). Direct communication between mobile devices in this manner may comprise sidelink and/or similar Device-to-Device (D2D) communication technologies. Sidelink, which is defined by 3GPP, is a form of D2D communication under the cellular-based LTE and NR standards.

An estimated location of mobile device 105 can be used in a variety of applications - e.g. to assist direction finding or navigation for a user of mobile device 105 or to assist another user (e.g. associated with external client 180) to locate mobile device 105. A "location" is also referred to herein as a "location estimate", "estimated location", "location", "location data," "position", "position estimate", "position fix", "estimated position", "location fix" or "fix". A location of mobile device 105 may comprise an absolute location of mobile device 105 (e.g. a latitude and longitude and possibly altitude) or a relative location of mobile device 105 (e.g. a location expressed as distances north or south, east or west and possibly above or below some other known fixed location or some other location such as a location for mobile device 105 at some known previous time). A location may also be specified as a geodetic location (as a latitude and longitude) or as a civic location (e.g. in terms of a street address or using other location related names and labels). A location may further include an uncertainty or error indication, such as a horizontal and possibly vertical distance by which the location is expected to be in error or an indication of an area or volume (e.g. a circle or ellipse) within which mobile device 105 is expected to be located with some level of confidence (e.g. 95% confidence).

The external client 180 may be a web server or remote application that may have some association with mobile device 105 (e.g. may be accessed by a user of mobile device 105) or may be a server, application, or computer system providing a location service to some other user or users which may include obtaining and providing the location of mobile device 105 (e.g. to enable a service such as friend or relative finder, asset tracking or child or pet location). Additionally or alternatively, the external client 180 may obtain and provide the location of mobile device 105 to an emergency services provider, government agency, etc.

IoT devices 190 may include various IoT devices, such as cameras (e.g., traffic cameras, security cameras, web cameras, etc.), communication-enabled tags, smoke detectors, sensors (e.g., proximity sensors, motion sensors, etc.), and the like.

IoT devices 190 may include any suitable number of IoT devices (e.g., ten, one hundred, one thousand, one million, etc.). It should be noted that IoT devices in IoT devices 190 may be fixed or mobile (e.g., IoT devices associated with vehicles, robots, and the like).

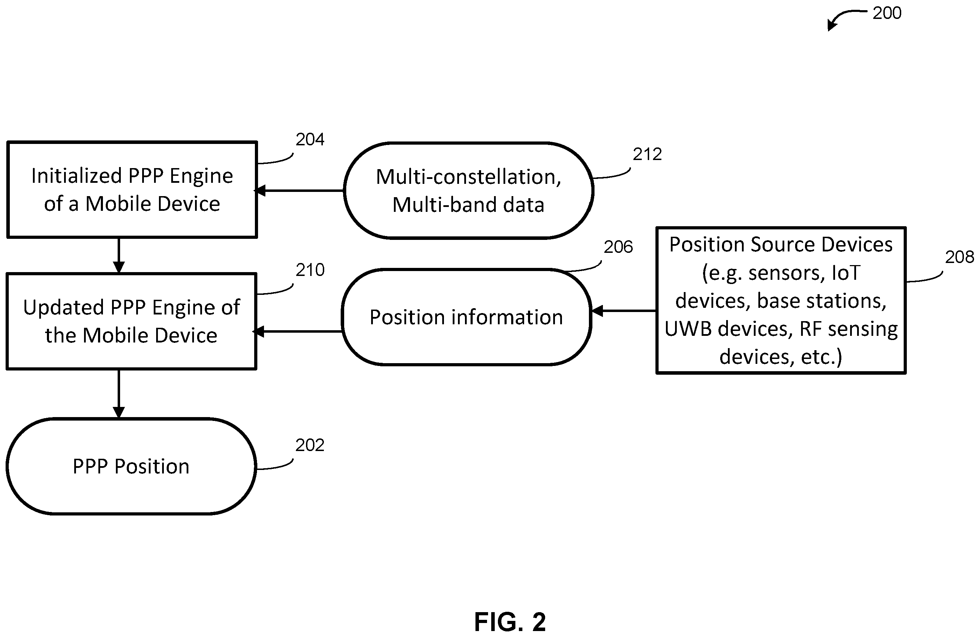

FIG. 2 is a block diagram of a positioning system 200, according to an embodiment.

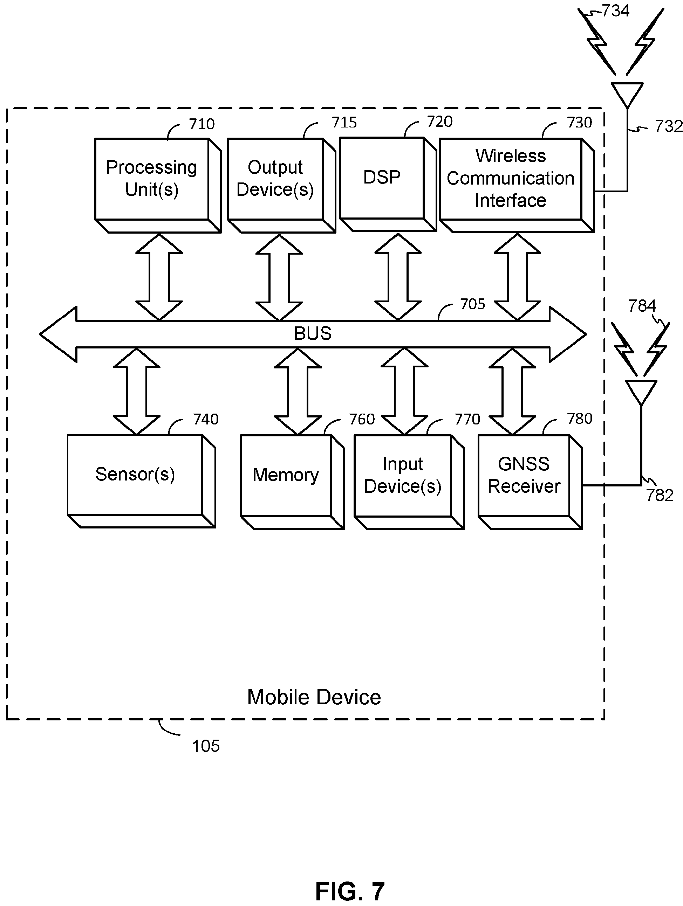

A PPP location can be provided by a PPP engine. The PPP engine may perform various steps or techniques to determine a PPP position 202 using PPP. PPP position 202 can indicate a current location or position of the mobile device. For example, the PPP engine may use a Kalman Filter, an Extended Kalman Filter, an Unscented Kalman Filter, a particle filter, or the like to iteratively converge to a solution that corresponds to the PPP position that is the location of the mobile device. Means for performing the functionality associated with the PPP engine may be performed by hardware and/or software components of a mobile device. Example components of a mobile device are illustrated in FIG. 7.

In some embodiments, the PPP engine can be in an initialized state, referred to herein as initialized PPP engine 204. Initialized PPP engine 204 may be initialized using multi-constellation, multi-band data 212.

Multi-constellation, multi-band data 212 may include, for example, GNSS data. GNSS data may include data such as carrier phase, a differential delay of GNSS signals of different frequencies, and the like. GNSS data can be obtained by one or more GNSS receivers of the mobile device. It should be noted that a single GNSS receiver may be capable of receiving GNSS data from multiple constellations and on multiple bands and/or frequencies.

In some embodiments, the PPP engine can be in an updated state, referred to herein as updated PPP engine 210. In some embodiments, the updated state may correspond to initialized PPP engine 204 that has received updated or additional position information. For example, as shown in FIG. 2, initialized PPP engine 204 may be updated to generate updated PPP engine 210 based on receipt of position information 206.

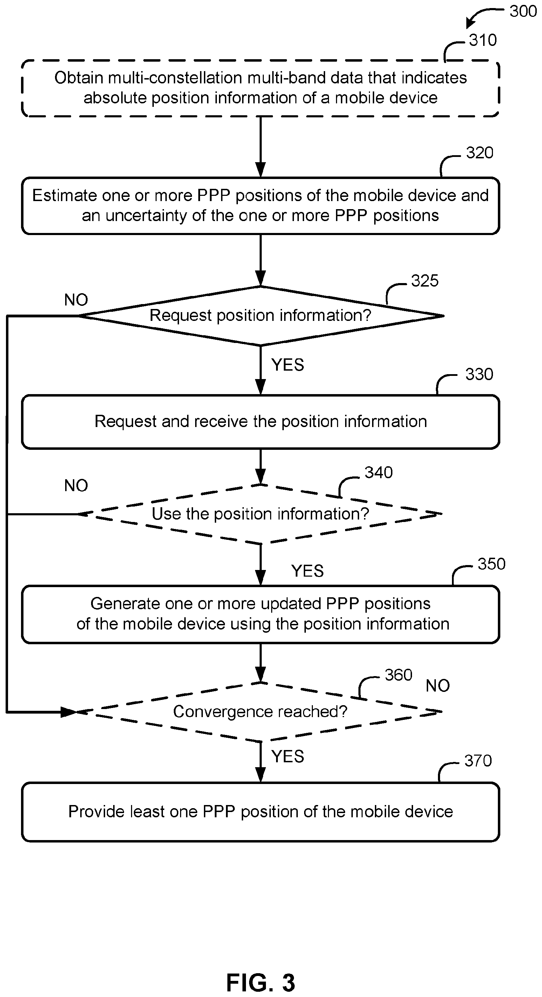

Position information 206 may be received by the mobile device from one or more position source devices of position source devices 208. Position source devices 208 are external to the mobile device. Examples of position source devices 208 include: one or more wireless base stations (e.g., 4G/LTE wireless base stations, 5G wireless base stations, wireless base stations that provide RTK data, or the like), one or more sensors (e.g., motion sensors, image sensors such as cameras, etc.), one or more IoT devices (e.g., a smart traffic camera, a smart device associated with a toll booth, etc.), one or more UWB devices (e.g., one or more UWB devices that may be configured to perform ranging), one or more RF sensing devices, one or more WiFi APs, and the like. Example techniques for determining position information 206 based on information transmitted by position source devices 208 are described in more detail in connection with FIG. 3

It should be noted that although FIG. 2 shows a PPP engine initialized using multi-constellation, multi-band data and updated using position information obtained from one or more position source device, other techniques for initializing and updating a PPP engine are contemplated. For example, in some embodiments, a PPP engine may not be initialized using multi-constellation, multi-band data. Rather, in some embodiments, a PPP engine may be initialized with other position information or any other initial estimate of position that may serve as a seed for the PPP engine.

In some embodiments, a PPP engine may be updated using position information obtained from one or more position source devices (e.g., one position source device, two position source devices, five position sources devices). Additionally, it should be noted that, in some embodiments, the PPP engine may request the position information from the one or more position source devices. For example, in some embodiments, the PPP engine may request the position information based on a current uncertainty level of the PPP engine and/or based on a closeness of the PPP engine to convergence, as shown in and described below in connection with FIG. 3.

In some embodiments, a PPP engine may be iteratively updated multiple times using position information received at multiple times. For example, in some embodiments, a PPP engine may be updated at a first time using first position information from a first position source device, and may be updated at a second time using second position information received from a second position source device. It should be understood that various combinations of sources of information for PPP engine initialization and/or PPP engine updates may be used.

**FIG.** 3 is a flow diagram of a method 300 of determining position information, according to an embodiment. Means for performing the functionality illustrated in one or more of the blocks shown in FIG. 3 may be performed by hardware and/or software components of a mobile device. Example components of a mobile device are illustrated in FIG. 7, which are described in more detail below.

At block 310, the functionality comprises obtaining multi-constellation, multi-band data that indicates absolute position information of a mobile device. Means for performing the functionality at block 310 may comprise a GNSS receiver of a mobile device, a processing unit of a mobile device, and/or other components of a mobile device, as illustrated in FIG. 7.

The multi-constellation, multi-band data may be GNSS data that is based on data from one or more satellites. The multi-constellation, multi-band data may indicate absolute position information in latitude, longitude, and/or elevation.

It should be noted that, due to an environment the mobile device is located in, the multi-constellation, multi-band data may not be accurate to a desired accuracy level (e.g., within 10 centimeters, within 1 meter, within 5 meters, etc.). For example, multi-constellation, multi-band data that comprises GNSS data may not be accurate within a desired accuracy level in an instance in which the mobile device is indoors, is exiting a tunnel, etc.

Additionally, it should be noted that, in some embodiments, block 310 can be omitted. For example, in some embodiments, one or more PPP positions of the mobile device can be determined using other blocks shown in FIG. 3 without obtaining multi-constellation, multi-band data.

At block 320, the functionality comprises estimating one or more PPP positions of the mobile device and an uncertainty associated with the one or more PPP positions. Means for performing the functionality at block 320 may comprise a processing unit of a mobile device, and/or other components of a mobile device, as illustrated in FIG. 7.

In some embodiments, the one or more PPP positions can be estimated by identifying one or more initial PPP positions. In some embodiments, the one or more initial PPP positions may correspond to an initial solution of an estimator that determines PPP positions. For example, in an instance in which the estimator includes a Kalman Filter, the estimated one or more PPP positions can correspond to initial states (e.g., initial position, velocity, and/or acceleration states) of the Kalman Filter. As another example, in an instance in which the estimator includes a particle filter, the estimated one or more PPP positions can correspond to one or more particles (e.g., one particle, five particles, ten particles, twenty particles, or the like) that have been selected based on an initial prior distribution. The initial prior distribution may be based on a grid that spans a region that includes an expected PPP position of the mobile device. In some embodiments, the one or more PPP positions may be estimated based on multi-constellation, multi-band data received at block 310. For example, in some embodiments, initial states of a Kalman Filter may be determined based on the multi-constellation, multi-band data. As another example, in some embodiments, initial states of particles of a particle filter may be selected based on the multi-constellation, multi-band data and/or uncertainty of the multi-constellation, multi-band data.

One or more uncertainty levels (sometimes referred to herein as a "position uncertainty") can be determined that are associated with the one or more PPP positions. In some embodiments, an uncertainty level may correspond to an uncertainty associated with an estimator used to determine the one or more PPP positions. For example, in an instance in which the estimator is a Kalman Filter, an uncertainty level may be based on a covariance matrix associated with the Kalman Filter. As another example, in an instance in which the estimator is a particle filter, an uncertainty level may be based on probabilities associated with particles of the particle filter.

It should be noted that, in some embodiments, an estimated time to convergence may be determined. An estimated time to convergence may indicate an estimated duration of time an estimator of PPP position will take to converge to a PPP position within a desired accuracy range (e.g., within 10 centimeters, between 10 - 20 centimeters, within 50 centimeters, or the like) or the reach a steady state status. In some embodiments, an estimated time to convergence may be determined based on an uncertainty level associated with the one or more PPP positions. For example, in some embodiments, an estimated time to convergence may be generally proportional to an uncertainty level such that an estimated time to convergence is higher with corresponding higher levels of uncertainty.

At block 325, the functionality comprises determining, by the mobile device, whether to request position information. Means for performing the functionality at block 325 may comprise a processing unit of a mobile device, and/or other components of a mobile device, as illustrated in FIG. 7.

In some embodiments, a determination of whether to request position information may be made based on a current uncertainty associated with the one or more PPP positions estimated at block 320. For example, in some embodiments a determination to request position information may be made in response to determining that the uncertainty exceeds a predetermined uncertainty threshold. Conversely, a determination to not request position information may be made in response to determining that the uncertainty meets or is below the predetermined uncertainty threshold. As another example, in some embodiments, a determination to request position information may be made in response to determining that an estimated time to convergence exceeds a predetermined convergence time threshold. Conversely, a determination to not request position information may be made in response to determining that the estimated time to convergence meets or is below the predetermined convergence time threshold.

In some embodiments, a determination to request position information may be made based on a current status, environment, or activity associated with the mobile device. For example, in an instance in which the mobile device determines that the mobile device is in a vehicle or is approaching a vehicle, the mobile device may determine that the position information is to be requested prior to the vehicle being in motion. As another example, in an instance in which the mobile device corresponds to a Virtual Reality (VR) or Augmented Reality (AR) headset, the VR or AR headset may determine that the position information is to be requested (e.g., to quickly obtain PPP position information accurate to a cm-level). As yet another example, in some embodiments, a determination to request position information may be made based on a historical pattern of use of the mobile device. As a more particular example, the mobile device may determine that the position information is to be requested in response to determining that a particular application or application type (e.g., a navigation application, or the like) is frequently used at a current time of day and and/or when the mobile device is within proximity of a particular geographical region (e.g., near a work place of a user of the mobile device, or the like).

If, at block 325, it is determined that position information is not to be requested ("no" at 325), method 300 can proceed to block 360 and determine whether convergence has been reached.

Conversely, if at block 325, it is determined that position information is to be requested, ("yes" at 325), method 300 can proceed to block 330 and can request and receive the position information.

At block 330, the functionality comprises requesting and receiving, by the mobile device, position information. Means for performing the functionality at block 330 may comprise a processing unit of a mobile device, and/or other components of a mobile device, as illustrated in FIG. 7.

In some embodiments, the position information can indicate a relative position of the mobile device to one or more position source devices. For example, the position source information can indicate that the mobile device is a particular distance (e.g., 10 centimeters, 50 centimeters, 1 meter, etc.) from a particular position source device. As another example, the position source information can indicate a direction of the mobile device to a particular position source device (e.g., to the North, to the Northwest, 30 degrees to the left, etc.). Additionally or alternatively, in some embodiments, the position information can indicate an absolute position of any of the one or more position source devices, for example, in latitude, longitude, and/or elevation.

In some embodiments, the mobile device can request the position information from one or more position source devices. In some embodiments, prior to requesting the position information, the mobile device can select a position source device from which to request the position information. Selection of the position source device may be based on various criteria or various combinations of criteria. The criteria may include a cost of the position information, computational resources required by the mobile device to determine the position information, an accuracy of the position information, information indicating that position information provided by the position source device meets or will meet a predetermined position uncertainty threshold, or any combination thereof. As a more particular example, a position source device may be selected for which a cost of position information received from the position source device is below a predetermined cost threshold. As another more particular example, a position source device may be selected for which accuracy of position information received from the position source device is within a desired accuracy range (e.g., within a desired accuracy of the PPP position to be provided). As yet another more particular example, a position source device may be selected that provides position information at the lowest cost and for which the accuracy of the position information is within a desired accuracy range.

In some embodiments, the position information can be received in connection with communications received by the mobile device from one or more position source devices.

For example, in an instance in which the one or more position source devices includes a wireless base station (e.g., a 4G/LTE base station, a 5G base station, and the like), the communications can include carrier wave information. As a more particular example, the communications can include RTK position information that includes one or more epochs of RTK data. Continuing with this more particular example, in some embodiments, the position information can include an RTK position determined based on the one or more epochs of RTK data. As another more particular example, in an instance in which the one or more position source devices includes a wireless base station (e.g., an LTE cell or base station, a 5G cell or base station, and the like), the communications can include range information (e.g., communication round-trip time) and/or directional information (e.g., based on a phased-array pattern of 5G antennas). In some embodiments, the mobile device may determine the position information based on signals (e.g., Positioning Reference Signals (PRS)) transmitted by a 5G cell or base station. In some such embodiments, the 5G cell or base station may be configured to function as a positioning-only beacon which transmits the signals (e.g., PRS signals) and/or may broadcast assistance data to assist positioning of the mobile device. Position information based on signals may comprise positioning-related measurements such as Received Signal Strength Indicator (RSSI), Round Trip signal propagation Time (RTT), Reference Signal Received Power (RSRP), Reference Signal Received Quality (RSRQ), Reference Signal Time Difference (RSTD), Time of Arrival (TOA), Angle Of Arrival (AOA), Receive Time-Transmission Time Difference (Rx-Tx), Differential AOA (DAOA), Angle Of Departure (AOD), and/or Timing Advance (TA). Additionally or alternatively, similar measurements may be made of sidelink signals transmitted by other mobile devices.

As yet another example, in an instance in which the one or more position source devices include a device (e.g., an IoT device, a Bluetooth ^{®} beacon device, and the like) that broadcasts beacons, the communications can include identifying information associated with the device that broadcasts the beacons (e.g., a name of the device, a location of the device, an identifier of a network the device is connected to, etc.).

As still another example, in an instance in which the one or more position source devices include a device that detects the mobile device in its proximity, the communications can include information associated with detection of the mobile device. Examples of such information can include a timestamp of detection of the mobile device, camera data associated with detection of the mobile device (e.g., camera data captured by a camera of the one or more position source devices that detected the mobile device), Time of Flight (TOF) information, and the like. Additionally or alternatively, the communications can include a location of the one or more position sources devices, such as latitude, longitude, and/or elevation data.

As still another example, the position information can be received based on communications received and/or transmitted between the mobile device and one or more position source devices capable of making Fine Time Measurements (FTM) or capable of performing ranging. Examples of such position source devices can include RF sensing devices, UWB devices, WiFi Aps, and the like. For example, in some embodiments, the position information can be based on communications between the mobile device and one or more WiFi APs, where the position information includes an estimate of a distance between the mobile device and each of the one or more WiFi APs based on Round Trip Time (RTT) measurements associated with a round trip time for signal propagation between the mobile device and the WiFi AP. As another example, in some embodiments, the position information can be based on communications between the mobile device and a UWB device. As a more particular example, in some embodiments, in response to being in proximity to each other, the mobile device and the UWB device can begin performing ranging. Continuing with this more particular example, position information can be calculated based on TOF information that indicates a distance between the mobile device and the UWB device. In some embodiments, the mobile device may determine the position information based on communications received from UWB devices, WiFi APs, or the like. For example, the mobile device may make one or more FTMs based on received communications to determine the position information.

As still another example, the position information can be received as part of a Vehicle-to-Everything (V2X) communication, such as from a vehicle or a mobile device in a vehicle in proximity to the mobile device. In some embodiments, the V2X communication may be received in response to a request from the mobile device. For example, the request may include a request for position information that meets or is below a position uncertainty threshold (e.g., an uncertainty of within 10-30 cm, an uncertainty of less than 10 cm, an uncertainty of less than 5 cm, or the like).

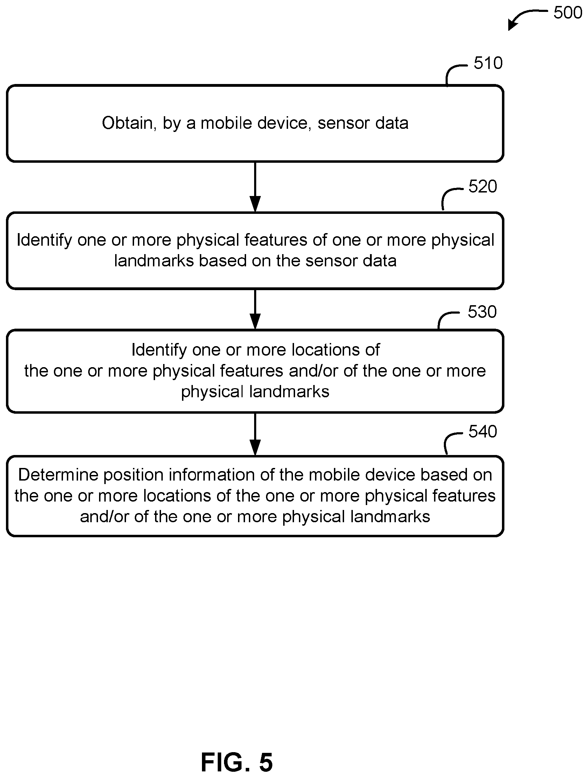

In some embodiments, the position information can be determined by the mobile device in response to a sensor of the mobile device (e.g., a camera, a LIDAR sensor, an RF sensor, etc.) detecting an external landmark and/or a physical feature of an external landmark. Continuing with this example, the position information can be determined based on a known absolute location of the external landmark or physical feature and a relative position of the mobile device to the external landmark or physical feature. More detailed techniques for determining position information based on sensor data are shown in and described below in connection with FIG. 5.

It should be noted that, in some embodiments, at block 330, the mobile device can additionally determine an uncertainty associated with the position information. In some embodiments, the uncertainty can indicate an error range associated with the position information, such as +/- 1 centimeter, +/- 5 centimeters, +/-20 centimeters, and the like. In some embodiments, the uncertainty may be expressed as a Dilution of Precision (DOP). In some embodiments, the uncertainty may be expressed over various axes, such as a Horizontal Dilution of Precision (HDOP), a Vertical Dilution of Precision (VDOP), a Position (3D) Dilution of Precision (PDOP), or the like. In some embodiments, the type of uncertainty calculated may depend on a device type associated with the mobile device. For example, in some embodiments, an HDOP may be calculated for a mobile phone, a wearable computer, an automotive vehicle or the like. As another example, a PDOP may be calculated for an aerial vehicle, such as a manned or unmanned aerial vehicle.

The uncertainty can be based on various factors. For example, in an instance in which the position information is based on RTK position information and/or an RTK position, the uncertainty can be based on a number of epochs of RTK data received. As a more particular example, the uncertainty can be lower in an instance in which there are relatively more epochs of RTK data than in an instance in which there are fewer epochs of RTK data.

As another example, in an instance in which the position information is determined based on camera data (e.g., camera data captured by a camera of a position source device as part of detecting the mobile device in proximity to the position source device and/or camera data captured by a camera of the mobile device that includes image data of one or more known physical landmarks), the uncertainty can be determined based on a quality of the camera data. As a more particular example, the uncertainty can be higher in an instance in which the camera data is of lower quality (e.g., blurry, dark, and the like) relative to an instance in which the camera data is of higher quality.

As yet another example, in an instance in which the position information is determined based on a ranging technique or an indoor positioning technique (e.g., based on RTT or TOF between the mobile device and one or more other devices, such as a WiFi AP and/or a UWB device), the uncertainty can be based on characteristics associated with measurement of a RTT or TOF. For example, in some embodiments, the uncertainty may be based on a duration of time over which ranging was performed, such that the uncertainty is lower when ranging is performed for a longer duration of time. As another example, in some embodiments, the uncertainty may be based on a magnitude of an RTT or a TOF. As a more particular example, in some embodiments, the uncertainty may be proportional to the RTT or the TOF such that the uncertainty is higher for further estimated distances between two devices. As yet another example, in some embodiments, the uncertainty may be based on a variance of a set of RTT or TOF measurements, such that the uncertainty is proportional to the variance.

At block 340, the functionality comprises determining, by the mobile device, whether to use the position information. Means for performing the functionality at block 340 may comprise a processing unit of a mobile device, and/or other components of a mobile device, as illustrate in FIG. 7.

In some embodiments, the mobile device can determine whether to use the position information based on the uncertainty associated with the position information. For example, in some embodiments, the mobile device can determine that the position information is to be used ("yes" at 340) in response to determining that the uncertainty meets or is below a threshold.

The threshold may be based on various criteria. For example, in some embodiments, the threshold may be a predetermined threshold (e.g., < 5 centimeters, < 10 centimeters, < 20 centimeters, or the like). As another example, in some embodiments, the threshold may be based on a device type of the mobile device. As a more particular example, different thresholds may be used for different device types, such as a mobile phone, a wearable computer, a computing device associated with a vehicle, or the like. As another more particular example, different thresholds may be used for devices associated with different types of vehicles, such as a non-autonomous vehicle, an autonomous vehicle, an aerial vehicle, an unmanned aerial vehicle, or the like. As yet another example, in some embodiments, the threshold may be based on an application type of an application executing on the mobile device, such as an application requesting or using the one or more PPP positions of the mobile device. As a more particular example, in some embodiments, different thresholds may be used for different application types, such as a map application, an e-commerce application, a social media application, or the like. As still another example, in some embodiments, the threshold may be based on a requested or desired accuracy by the mobile device.

In some embodiments, the mobile device can determine whether to use the position information based whether the initial estimate of the PPP position(s) of the mobile device is associated with an uncertainty that exceeds the uncertainty of the position information. For example, in some embodiments, in an instance in which the uncertainty exceeds the uncertainty associated with the initial estimate of the PPP position(s) (e.g., as determined at block 320), the mobile device can determine that the position information is not to be used ("no" at block 340). Conversely, in some embodiments, in an instance in which the uncertainty does not exceed the uncertainty associated with the initial estimate of the PPP position(s) (e.g., as determined at block 320), the mobile device can determine that the position information is to be used ("yes" at block 340). That is, in some embodiments, the mobile device can determine that the position information is to be used if the position information is, by some metric, determined to be more accurate that the current estimated PPP position(s).

It should be noted that, in some embodiments, block 340 can be omitted. For example, in some embodiments, block 340 can be omitted in instances in which the position information is requested based on an accuracy of the one or more position source devices that provided the position information. As a more particular example, in an instance in which the one or more position source devices are selected at block 330 due to a presumed accuracy of position information provided by the selected one or more position source devices, block 340 may be omitted.

If, at block 340, it is determined that the position information is not to be used ("no" at block 340), method 300 can proceed to block 360 and can determine whether convergence has been reached.

Conversely, if, at block 340, it is determined that the position information is to be used ("yes" at block 340), method 300 can proceed to block 350 and can use the position information to update the one or more PPP positions of the mobile device.

At block 350, the functionality comprises generating one or more updated PPP positions of the mobile device using the position information. Means for performing the functionality at block 350 may comprise a processing unit of a mobile device, and/or other components of a mobile device, as illustrated in FIG. 7.

In some embodiments, one or more updated PPP positions may be generated by constraining a covariance matrix of a Kalman Filter used to determine the one or more PPP positions. That is, in some embodiments, the position information may be provided as priors for the Kalman Filter that serve to constrain the covariance matrix. As another example, in some embodiments, the one or more updated PPP positions may be generated by resampling particles associated with a particle filter based on the position information to determine the one or more PPP positions. As a more particular example, in some embodiments, an importance weight associated with each particle may be updated based on the position information, and the particles may be resampled based on the importance weights.

At block 360, the functionality comprises determining convergence has been reached. Means for performing the functionality of block 360 may comprise a processing unit of a mobile device, and/or other components of a mobile device, as illustrated in FIG. 7.

In some embodiments, determination of whether convergence has been reached can be based on determining whether the one or more PPP positions meet or are below one or more convergence thresholds.

In some embodiments, the one or more convergence thresholds may correspond to a requested or desired accuracy of the one or more PPP positions. For example, in some embodiments, a determination that convergence has been reached can be made in response to determining that an uncertainty of the one or more PPP positions meets or is less than a desired accuracy requested by the mobile device. Examples of desired accuracy may include 10-20 centimeters HDOP, less than 10 centimeters PDOP, less than 50 centimeters HDOP, or the like.

It should be noted that, in some embodiments, the requested accuracy may depend on a device type associated with the mobile device. For example, a device associated with an automotive vehicle may request a particular HDOP (e.g., between 10 - 20 centimeters, between 10 - 50 centimeters, or the like), whereas a device associated with an aerial vehicle may request a particular PDOP (e.g., less than 10 centimeters, less than 15 centimeters, or the like). In some embodiments, the requested accuracy may be based on an application executing on the mobile device. Additionally or alternatively, in some embodiments, the requested accuracy may be based on a task being performed by the mobile device. Examples of tasks may include updating or presenting a map, providing navigation results, identifying a location of another mobile device in proximity, or the like.

In some embodiments, determining whether the one or more PPP positions meet or are below the one or more convergence thresholds may include determining whether an estimator used to determine the one or more PPP positions has reached a steady state status. For example, in an instance in which the one or more PPP positions are determined using an Kalman Filter, a determination that a steady status has been reached can be made in response to determining that values of a covariance matrix associated with the Kalman Filter have changed by less than a predetermined threshold (e.g., less than 10%, less than 5%, or the like) over a time window (e.g, over the past one minute, over the past thirty seconds, over the past five seconds, or the like). As another example, in an instance in which the one or more PPP positions are determined using a particle filter, a determination that a steady state status has been reached can be made in response to determining that probabilities associated with one or more particles have not changed by more than a predetermined threshold (e.g., less than 10%, less than 5%, or the like) over a time window (e.g., over the past one minute, over the past thirty seconds, over the past five seconds, or the like)..

It should be noted that, in some embodiments, by using position information at block 350 to generate the one or more updated PPP positions, an estimator (e.g., a Kalman Filter, a particle filter, or the like) may converge. In some such embodiments, block 360 may be omitted. For example, in an instance in which the position information has an accuracy within a desired accuracy range corresponding to the convergence threshold, the convergence threshold may be reached when the position information is used to constrain the estimator. As a more particular example, in an instance in which the desired accuracy is within 10 centimeters, and in which the accuracy of the position information is within 5 centimeters, by providing the position information to the estimator (e.g., at block 350), a predicted state by the estimator is constrained to within the desired accuracy of 10 centimeters.

If, at block 360, it is determined that convergence has not been reached ("no" at 360), method 300 can loop back to block 320 and can estimate updated PPP positions of the mobile device. For example, subsequent predictions at a next time step can be made based on the current estimated one or more PPP positions.

Conversely, if, at block 360, it is determined that convergence has been reached ("yes" at 360), method 300 can proceed to block 370.

At block 370, the functionality comprises providing at least one PPP position of the mobile device. Means for performing the functionality of block 370 may comprise a processing unit of a mobile device, a display of a mobile device (e.g., to display a map that indicate the at least one PPP position), and/or other components of the mobile device, as illustrated in FIG. 7.

For example, in some embodiments, the mobile device can present a map that indicates the at least one PPP position. As another example, the mobile device can transmit a message to another device (e.g., another mobile device, a server, etc.) that indicates the at least one PPP position.

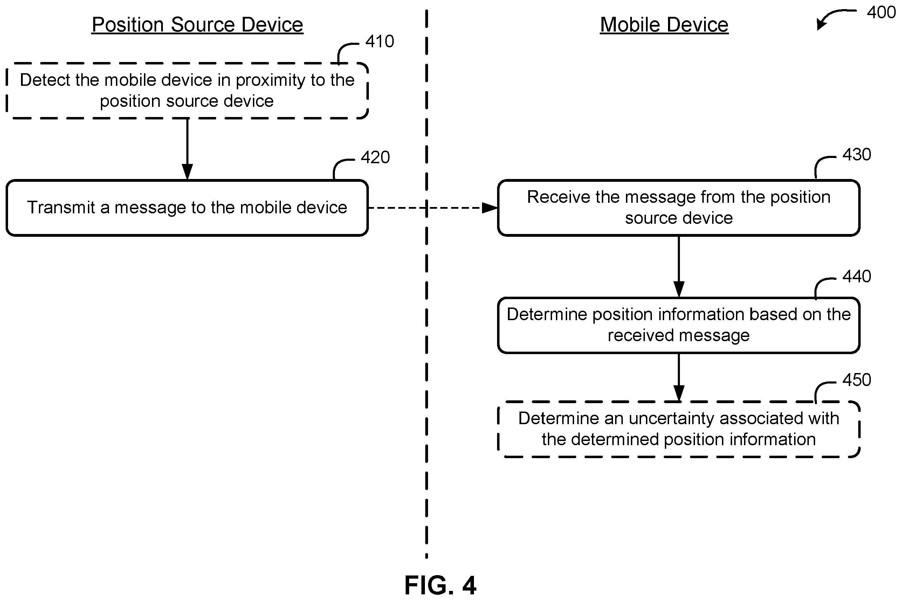

FIG. 4 is an information flow diagram of a method 400 of determining position information, according to an embodiment. Means for performing the functionality illustrated in one or more of the blocks shown in FIG. 4 may be performed by hardware and/or software components of a mobile device and/or a position source device (e.g., an IoT device, a wireless beacon device, and the like). Example components of a mobile device are illustrated in FIG. 7, which are described in more detail below

At block 410, the functionality comprises the position source device detecting the mobile device in proximity to the position source device. Means for performing the functionality of block 410 may comprise a processing unit of a position source device, one or more sensors (e.g., a camera, a motion sensor, etc.) of a position source device, and/or other components of the position source device, as illustrated in FIG. 7.

In some embodiments, the position source device can detect the mobile device based on a sensor, such as a camera associated with the position source device, a motion detection sensor associated with the position source device, etc.

For example, a position source device may capture or obtain camera data that includes one or more images that indicate a presence of the mobile device. As a more particular example, in an instance in which the mobile device is physically associated with (e.g., in or on) a vehicle, the position source device may capture camera data that includes at least a portion of the vehicle (e.g., a front portion of the vehicle, a license plate of the vehicle, a top portion of the vehicle, and the like). Examples of position source devices associated with a camera can include a traffic camera, a camera at a toll booth, a camera at an intersection or stoplight, a security camera, and the like.

As another example, a position source device may detect the mobile device based on a detection of a tag that has been paired with the mobile device. Examples of such position source devices may include a scanning device at a toll booth that detects E-Z pass toll tags, a scanning device associated with an electronic payment system, a proximity detector that can detect a tag that broadcasts identifying information, and the like.

It should be noted that, in some embodiments, block 410 can be omitted. For example, in some embodiments, a position source device may transmit messages to the mobile device (e.g., as described below in connection with block 420) without first detecting the mobile device. For example, in some embodiments, such a position source device may periodically broadcast messages rather than transmitting a message in response to a detection of a mobile device.

At block 420, the functionality comprises transmitting a message to the mobile device. Means for performing the functionality of block 420 can include a processing unit of a position source device, a wireless communication interface of a position source device, and/or other components of the position source device, as shown in FIG. 7.

In some embodiments, the message transmitted to the mobile device can include location information associated with the position source device, such as latitude, longitude, or elevation information indicating a location of the position source device.

In some embodiments, in an instance in which the message is transmitted to the mobile device in response to the position source device detecting the mobile device (e.g., at block 410), the message can indicate information associated with the detection, such as a timestamp associated with a time at which the mobile device was detected, camera data associated with the detection, and the like.

In some embodiments, the message can indicate a relative position of the mobile device to the position source device. For example, in an instance in which the position source device detected the mobile device via captured camera data, the relative position of the mobile device to the position source device can be determined based on a field of view of the camera associated with the position source device. As a more particular example, in an instance in which the mobile device is associated with a vehicle, and in which the mobile device is detected based on camera data obtained by the position source device that includes at least a portion of the vehicle, the relative position of the mobile device to the position source device can be determined based on a position of the portion of the vehicle within the camera image data relative to the field of view of the camera.

At block 430, the functionality comprises receiving, by the mobile device, the message from the position source device. Means for performing the functionality of block 430 can include a processing unit of the mobile device, a wireless communication interface of the mobile device, and/or other components of the mobile device, as shown in FIG. 7.

It should be noted that, in some embodiments, the message may be received by an application executing on the mobile device. For example, in an instance in which the position source device is a scanning device associated with a toll booth, the message may be received by an application executing on the mobile device that is provided by an entity that operates the toll booth and/or that has been previously paired or associated with the scanning device or the toll booth. As another example, in an instance in which the position source device is a scanning device associated with an electronic payment system, the message may be received by an application executing on the mobile device that is associated with the electronic payment system.

At block 440, the functionality comprises determining position information based on the received message. Means for performing the functionality of block 440 can include a processing unit of the mobile device, and/or other components of the mobile device, as shown in FIG. 7.

In some embodiments, the position information can be determined by extracting information included in the message received by the mobile device from the position source device.

Additionally or alternatively, in some embodiments, the mobile device can determine the position information by combining various pieces of information included in the message received from the position source device. For example, in an instance in which the message includes an absolute position or location of the position source device, and in which the message includes information indicating a relative position of the mobile device with respect to the position source device, the mobile device can determine an estimated absolute position of the mobile device by combining the relative position of the mobile device with respect to the position source device and the absolute position or location of the position source device.

At block 450, the functionality comprises determining an uncertainty associated with the determined position information. Means for performing the functionality of block 450 can include a processing unit of the mobile device, and/or other components of the mobile device, as shown in FIG. 7.

In some embodiments, the uncertainty can indicate an error range of the position information. The uncertainty may be expressed as a DOP value, such as an HDOP value, a VDOP value, a PDOP value, or the like. For example, the uncertainty can indicate that the position information is within about +/- 10 centimeters, within about +/- 50 centimeters, or the like.

In some embodiments, the uncertainty can be determined based on a quality of information included in the message received from the position source device at block 430. For example, in an instance in which the position information is determined based on camera data captured by a camera associated with the position source device, the uncertainty can be based on a quality of the camera data. As a more particular example, the uncertainty can be based on whether the camera data is blurry, dark, etc.

As another example, in some embodiments, the uncertainty can be determined based on a device type associated with the position source device. For example, in some embodiments, lower uncertainty values can be assigned to particular device types relative to other device types. As a more particular example, an uncertainty value associated with position information received from a toll booth camera may be lower than an uncertainty value associated with position information received from a wireless beacon device.

Additional criteria associated with a determination of the uncertainty of the position information are described above in connection with block 330 of FIG. 3.

It should be noted that, in some embodiments, the uncertainty can be determined by the position source device. In some such embodiments, an uncertainty value may be received by the mobile device, for example, in the message received at block 430 from the position source device.

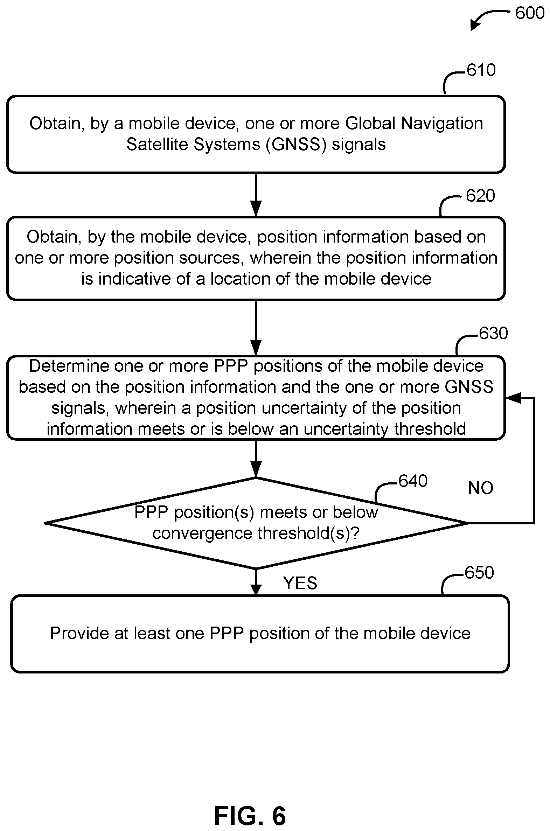

It should be noted that the position information determined at block 440 and/or the uncertainty determined at block 450 may be used to determine whether to use the position information to generate one or more PPP positions of the mobile device, as shown in and described above in connection with FIG. 3 and/or as shown in and described below in connection with FIG. 6.

**FIG. 5** is a flow diagram of a method 500 of determining position information based on sensor data, according to an embodiment. Means for performing the functionality illustrated in one or more of the blocks shown in FIG. 5 may be performed by hardware and/or software components of a mobile device, and/or by hardware and/or software components of a server. Example components of a mobile device are illustrated in FIG. 7, which are described in more detail below.

At block 510, the functionality comprises obtaining, by a mobile device, sensor data. The sensor data can include camera data, RF sensing data, LIDAR data, or the like. In some embodiments, the sensor data can include any combination of camera data, RF sensing data, LIDAR data, or the like. Means for performing the functionality can include sensor(s) of a mobile device (e.g., one or more cameras of the mobile device, one or more LIDAR sensors associated with the mobile device, one or more RF sensing devices associated with the mobile device, or the like), a processing unit of a mobile device, and/or other components of the mobile device, as shown in FIG. 7. In instances in which the mobile device is a vehicle, the means for performing the functionality can include cameras associated with the vehicle, LIDAR associated with the vehicle, RF sensing devices associated with the vehicle, and/or other sensors.

In some embodiments, the sensor data can be captured automatically. For example, in some embodiments, the sensor data may be captured regularly, such as at periodic intervals. Alternatively, in some embodiments, the sensor data may be captured in response to a trigger. In some embodiments, the trigger may include an explicit user instruction to capture the sensor data, a determination that position information has not been updated in more than a predetermined amount of time (e.g., in more than five minutes, in more than ten minutes, etc.), and the like.

At block 520, the functionality comprises identifying one or more physical features of one or more physical landmarks based on the sensor data. Means for performing the functionality can include a processing unit of a mobile device, and/or other components of a mobile device, as shown in FIG. 7. It should be noted that in instances in which the physical landmark is identified at a server, means for performing the functionality can include a processing unit of the server.

Examples of physical landmarks can include a statue, a particular building (e.g., an office building, a residential building, a school, a library, a landmark building, etc.), a street sign, a highway sign, and the like. Examples of physical features can include components of a building (a spire of a building, a roof of a building, a window of a building, a hallway or corridor of a building, or the like), components of a statue (e.g., a head of the statue, a torso of the statue, or the like), and/or any other suitable physical features.

The physical features may be identified using various image processing techniques or other processing techniques. For example, camera data may be processed using various image processing techniques (e.g., depth estimation, object segmentation, etc.). Continuing with this example, a physical feature present in camera data may be identified by, e.g., comparing portions of the image data to a database of known physical landmarks. As another example, LIDAR data may be processed to generate a 3-D representation of the LIDAR data. Continuing with this example, in some embodiments, the physical features may be identified by using any suitable processing or analysis of the 3-D representation of the LIDAR data. As a more particular example, in some embodiments, portions of the 3-D representation may be segmented to identify objects in the 3-D representation. Continuing with this particular example, in some embodiments, physical features of particular physical landmarks may be identified by comparing the identified objects to a database of known physical landmarks.

It should be noted that, in some embodiments, various text processing techniques may be applied to camera data to, for example, identify text of signs associated with a physical landmark. The identified text can then be used to identify the physical landmark. For example, text of a highway sign that indicates an exit number associated with the highway sign may be identified. As another example, text of a sign associated with a building may be identified to determine an address of the building, a name of the building, etc. In some embodiments, identified text may be used to identify the physical landmark. For example, a specific building may be identified based on text included in the camera data that indicates an address of the specific building.

At block 530, the functionality comprises identifying a location of the physical landmark or of the physical features of the physical landmark. Means for performing the functionality can include a processing unit of the mobile device, and/or other components of a mobile device, as shown in FIG. 7. It should be noted that in instances in which the position information associated with the physical landmark is identified at a server, the means for performing the functionality can include a processing unit of the server.

In some embodiments, the location can indicate an absolute location of the physical landmark. In some embodiments, the absolute location of the physical landmark or of the physical feature of the physical landmark can be retrieved, for example, from a database that stores known locations of various physical landmarks. For example, in an instance in which the physical landmark corresponds to a building (e.g., a building having a particular shape or façade that was identified based on the sensor data, a building having a particular address that was identified in text of the camera data, etc.), the absolute location of the building can be retrieved from a map database.

It should be noted that such a database may be stored on any suitable device. For example, the database may be stored in memory of the mobile device. As a more particular example, a database that includes physical landmarks frequently passed by the mobile device may be stored in memory of the mobile device. As another more particular example, a database that includes physical landmarks that are waypoints on a planned trip may be stored in memory of the mobile device. It should be noted that such a database may be curated via explicit user input and/or curated via a machine learning algorithm that identifies commonly passed physical landmarks or the like. Additionally or alternatively, in some embodiments, such a database may be stored on a server, and the database may be queried by the mobile device and/or by a server to identify the position information of the physical landmark.

It should be noted that, in some embodiments, the physical landmark may be identified at a server rather than at the mobile device. In some such embodiments, the mobile device may transmit the image data to the server (e.g., via a wireless communication network) for processing at block 520. Similarly, in some embodiments, the position information associated with the physical landmark may be identified at a server rather than at the mobile device. In some such embodiments, the mobile device may receive the position information from the server (e.g., via a wireless communication network) at block 530.

At block 540, the functionality comprises determining position information of the mobile device based on the one or more locations of the one or more physical features and/or of the one or more physical landmarks. Means for performing the functionality can include a processing unit of a mobile device, and/or other components of the mobile device, as shown in FIG. 7.

In some embodiments, the position information of the mobile device may be determined by combining the location of the physical feature(s) or of the physical landmark(s) with information indicating a relative position of the mobile device to the physical feature(s) or to the physical landmark(s). For example, in some embodiments, the sensor data can indicate a distance of the mobile device to the physical feature(s) or to the physical landmark(s) and/or a direction of the mobile device from the physical feature(s) or to the physical landmark(s). Continuing with this example, the position information of the mobile device may be determined by calculating an absolute location of the mobile device based on the distance of the mobile device to the physical feature(s) or to the physical landmark(s) in the direction of the mobile device from the physical feature(s) or to the physical landmark(s).

It should be noted that the position information determined at block 540 may be used to determine the one or more PPP positions of the mobile device, as shown in and described above in connection with FIG. 3.

**FIG.** 6 is a flow diagram of a method 600 of determining position information, according to an embodiment. Means for performing the functionality illustrated in one or more of the blocks shown in FIG. 6 may be performed by hardware and/or software components of a mobile device. Example components of a mobile device are illustrated in FIG. 7, which are described in more detail below.

At block 610, the functionality comprises obtaining one or more GNSS signals. Means for performing the functionality at block 610 may comprise a GNSS receiver of a mobile device, a processing unit of a mobile device, and/or other components of a mobile device, as illustrated in FIG. 7.

The one or more GNSS signals may correspond to one or more multi-constellation, multi-band signals. The one or more multi-constellation, multi-band signals may be GNSS data that is based on data from one or more satellites. The one or more multi-constellation, multi-band signals may be used to provide absolute position information of latitude, longitude, and/or elevation.

At block 620, the functionality comprises obtaining, by the mobile device, position information based on one or more position sources, where the position information is indicative of a location of the mobile device. Means for performing the functionality include a processing unit of a mobile device, and/or other components of a mobile device, as shown in FIG. 7.

As described above in connection with FIGS. 2-5, the position information may include position information received from one or more position source devices (e.g., wireless cellular network base stations, wireless base stations that provide RTK data, IoT devices, wireless beacon devices, UWB devices that are configured to perform ranging, RF sensing devices, WiFi APs, etc.). Additionally or alternatively, in some embodiments, the position information may include position information obtained by one or more sensors of the mobile device, as shown in and described above in connection with FIG. 5.

At block 630, the functionality comprises determining one or more PPP positions of the mobile device based on the position information and the one or more GNSS signals, wherein a position uncertainty of the position information meets or is below an uncertainty threshold. Means for performing the functionality include a processing unit of a mobile device, and/or other components of the mobile device, as shown in FIG. 7.

As described above in connection with FIGS. 2 and 3, the one or more PPP positions may be determined using an estimator (e.g., a Kalman Filter, an Extended Kalman Filter, an Unscented Kalman Filter, a particle filter, or the like) to iteratively update predicted states that correspond to the one or more PPP positions. In some embodiments, the position information may be used to determine the one or more PPP positions by constraining a covariance matrix associated with a Kalman Filter, by resampling particles of a particle filter based on the position information, or the like.

At block 640, the functionality comprises determining whether at least one of the one or more PPP positions meet or are below one or more convergence threshold(s). Means for performing the functionality include a processing unit of a mobile device, and/or other components of the mobile device, as shown in FIG. 7.

As described above in connection with FIG. 3, the one or more convergence thresholds may be based on a requested accuracy of the mobile device. For example, in some embodiments, it can be determined that at least one of the one or more PPP positions meet or is below the one or more convergence thresholds in response to determining that the at least one PPP position meets or is below the requested accuracy of the mobile device. As a more particular example, in an instance in which the mobile device is an automotive device that has requested an accuracy of 10-20 centimeters HDOP, it can be determined that the at least one PPP position meets or is below the one or more convergence thresholds in response to determining that the at least one PPP position has an uncertainty less than the requested 10-20 centimeters HDOP.

As another example, in some embodiments, it can be determined that the at least one PPP position of the one or more PPP positions meets or is below the one or more convergence thresholds in response to determining that an estimator used to determine the one or more PPP positions has reached a steady state status. As a more particular example, a steady state status may be identified based on a determination that a covariance matrix associated with a Kalman Filter has changed by less than a predetermined threshold over a time window. As another more particular example, a steady state status may be identified based on a determination that probabilities of particles associated with a particle filter have changed by less than a predetermined threshold over a time window.

If, at block 640, it is determined that the at least one PPP position of the one or more PPP positions exceeds the one or more convergence thresholds ("no" at 640), method 600 can loop back to block 630 and can update the determination of the one or more PPP positions of the mobile device. It should be noted that, in some embodiments, the updated one or more PPP positions may be determined based on additional one or more GNSS signals and/or additional position information. That is, in some embodiments, method 600 can loop back to block 610 and/or block 620.

Conversely, if at block 640, it is determined that the at least one PPP position of the one or more PPP positions meets or is below the one or more convergence thresholds ("yes" at block 640), method 600 can proceed to block 650.

The functionality of block 650 comprises providing the at least one PPP position of the mobile device. Means for performing the functionality of block 650 include a processing unit of the mobile device, a display of the mobile device (e.g., for presenting a map that indicates the at least one PPP position of the mobile device), and/or other components of the mobile device, as shown in FIG. 7.

In some embodiments, the at least one PPP position can be provided via a map presented by the mobile device. As another example, in some embodiments, the at least one PPP position can be transmitted from the mobile device to another device (e.g., another mobile device, a server, etc.).

FIG. 7 illustrates an embodiment of a mobile device 105, which can be utilized as described herein above (e.g., in association with FIGS. 1-6). For example, the mobile device 105 can perform one or more of the functions of the methods shown in FIGS. 3, 4, 5, and/or 6. It should be noted that FIG. 7 is meant only to provide a generalized illustration of various components, any or all of which may be utilized as appropriate. It can be noted that, in some instances, components illustrated by FIG. 7 can be localized to a single physical device and/or distributed among various networked devices, which may be disposed at different physical locations. Furthermore, as previously noted, the functionality of the mobile discussed in the previously described embodiments may be executed by one or more of the hardware and/or software components illustrated in FIG. 7.

The mobile device 105 is shown comprising hardware elements that can be electrically coupled via a bus 705 (or may otherwise be in communication, as appropriate). The hardware elements may include a processing unit(s) 710 which can include without limitation one or more general-purpose processors, one or more specialpurpose processors (such as digital signal processor (DSP) chips, graphics acceleration processors, application specific integrated circuits (ASICs), and/or the like), and/or other processing structures or means. As shown in FIG. 7, some embodiments may have a separate DSP 720, depending on desired functionality. Location determination and/or other determinations based on wireless communication may be provided in the processing unit(s) 710 and/or wireless communication interface 730 (discussed below). The mobile device 105 also can include one or more input devices 770, which can include without limitation one or more keyboards, touch screens, touch pads, microphones, buttons, dials, switches, and/or the like; and one or more output devices 715, which can include without limitation one or more displays (e.g., touch screens), light emitting diodes (LEDs), speakers, and/or the like.

The mobile device 105 may also include a wireless communication interface 730, which may comprise without limitation a modem, a network card, an infrared communication device, a wireless communication device, and/or a chipset (such as a Bluetooth^{®} device, an IEEE 802.11 device, an IEEE 802.15.4 device, a WiFi device, a WiMAX device, a WAN device, and/or various cellular devices, etc.), and/or the like, which may enable the mobile device 105 to communicate with other devices as described in the embodiments above. The wireless communication interface 730 may permit data and signaling to be communicated (e.g., transmitted and received) with TRPs of a network, for example, via eNBs, gNBs, ng-eNBs, access points, various base stations and/or other access node types, and/or other network components, computer systems, and/or any other electronic devices communicatively coupled with TRPs, as described herein. The communication can be carried out via one or more wireless communication antenna(s) 732 that send and/or receive wireless signals 734. According to some embodiments, the wireless communication antenna(s) 732 may comprise a plurality of discrete antennas, antenna arrays, or any combination thereof. The antenna(s) 732 may be capable of transmitting and receiving wireless signals using beams (e.g., Tx beams and Rx beams). Beam formation may be performed using digital and/or analog beam formation techniques, with respective digital and/or analog circuitry. The wireless communication interface 730 may include such circuitry.

Depending on desired functionality, the wireless communication interface 730 may comprise a separate receiver and transmitter, or any combination of transceivers, transmitters, and/or receivers to communicate with base stations (e.g., ng-eNBs and gNBs) and other terrestrial transceivers, such as wireless devices and access points. The mobile device 105 may communicate with different data networks that may comprise various network types. For example, a Wireless Wide Area Network (WWAN) may be a CDMA network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, a WiMAX (IEEE 802.16) network, and so on. A CDMA network may implement one or more RATs such as CDMA2000, WCDMA, and so on. CDMA2000 includes IS-95, IS-2000 and/or IS-856 standards. A TDMA network may implement GSM, Digital Advanced Mobile Phone System (DAMPS), or some other RAT. An OFDMA network may employ LTE, LTE Advanced, 5G NR, and so on. 5G NR, LTE, LTE Advanced, GSM, and WCDMA are described in documents from 3GPP. CDMA2000 is described in documents from a consortium named "3rd Generation Partnership Project X3" (3GPP2). 3GPP and 3GPP2 documents are publicly available. A wireless local area network (WLAN) may also be an IEEE 802.11x network, and a wireless personal area network (WPAN) may be a Bluetooth ^{®} network, an IEEE 802.15x, or some other type of network. The techniques described herein may also be used for any combination of WWAN, WLAN and/or WPAN.

The mobile device 105 can further include sensor(s) 740. Sensors 740 may comprise, without limitation, one or more inertial sensors and/or other sensors (e.g., accelerometer(s), gyroscope(s), camera(s), magnetometer(s), altimeter(s), microphone(s), proximity sensor(s), light sensor(s), barometer(s), and the like), some of which may be used to obtain position-related measurements and/or other information.

Embodiments of the mobile device 105 may also include a GNSS receiver 780 capable of receiving signals 784 from one or more GNSS satellites using an antenna 782 (which could be the same as antenna 732). Positioning based on GNSS signal measurement can be utilized to complement and/or incorporate the techniques described herein. The GNSS receiver 780 can extract a position of the mobile device 105, using conventional techniques, from GNSS satellites 110 of a GNSS system, such as GPS, Galileo, GLONASS, Quasi-Zenith Satellite System (QZSS) over Japan, Indian Regional Navigational Satellite System (IRNSS) over India, BeiDou Navigation Satellite System (BDS) over China, and/or the like. Moreover, the GNSS receiver 780 can be used with various augmentation systems (e.g., a Satellite Based Augmentation System (SBAS)) that may be associated with or otherwise enabled for use with one or more global and/or regional navigation satellite systems, such as, e.g., Wide Area Augmentation System (WAAS), European Geostationary Navigation Overlay Service (EGNOS), Multifunctional Satellite Augmentation System (MSAS), and Geo Augmented Navigation system (GAGAN), and/or the like.

It can be noted that, although GNSS receiver 780 is illustrated in FIG. 7 as a distinct component, embodiments are not so limited. As used herein, the term "GNSS receiver" may comprise hardware and/or software components configured to obtain GNSS measurements (measurements from GNSS satellites). In some embodiments, therefore, the GNSS receiver may comprise a measurement engine executed (as software) by one or more processing units, such as processing unit(s) 710, DSP 720, and/or a processing unit within the wireless communication interface 730 (e.g., in a modem). A GNSS receiver may optionally also include a positioning engine, which can use GNSS measurements from the measurement engine to determine a position of the GNSS receiver using an Extended Kalman Filter (EKF), Weighted Least Squares (WLS), a hatch filter, particle filter, or the like. The positioning engine may also be executed by one or more processing units, such as processing unit(s) 710 or DSP 720.

The mobile device 105 may further include and/or be in communication with a memory 760. The memory 760 can include, without limitation, local and/or network accessible storage, a disk drive, a drive array, an optical storage device, a solid-state storage device, such as a random access memory (RAM), and/or a read-only memory (ROM), which can be programmable, flash-updateable, and/or the like. Such storage devices may be configured to implement any appropriate data stores, including without limitation, various file systems, database structures, and/or the like.

The memory 760 of the mobile device 105 also can comprise software elements (not shown in FIG. 7), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 760 that are executable by the mobile device 105 (and/or processing unit(s) 710 or DSP 720 within mobile device 105). In an aspect, then such code and/or instructions can be used to configure and/or adapt a general-purpose computer (or other device) to perform one or more operations in accordance with the described methods.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media and volatile media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

Having described several embodiments, various modifications, alternative constructions, and equivalents may be used without departing from the scope of the disclosure. For example, the above elements may merely be a component of a larger system, wherein other rules may take precedence over or otherwise modify the application of the various embodiments. Also, a number of steps may be undertaken before, during, or after the above elements are considered. Accordingly, the above description does not limit the scope of the disclosure.

## Claims

1. A mobile device for determining a Precise Point Positioning, PPP, position, the mobile device comprising:
a Global Navigation Satellite System, GNSS, receiver;
a memory; and
one or more processing units communicatively coupled with the GNSS receiver and the memory, the one or more processing units configured to:
obtain (610), via the GNSS receiver, one or more GNSS signals;
obtain (620) position information based on one or more position sources, wherein the position information is indicative of a location of the mobile device;
in response to a position uncertainty of the position information meeting or being below an uncertainty threshold, determine (630) one or more PPP positions of the mobile device based on the obtained position information and the one or more GNSS signals, wherein determining a PPP position of the mobile device comprises using a Bayesian estimator to iteratively update a predicted location based on the one or more GNSS signals and using the obtained position information to constrain the predicted location of the mobile device;
determine (640) whether at least one PPP position meets or is below one or more convergence thresholds; and
in response to determining that at least one PPP position meets or is below the one or more convergence thresholds, provide (650) the at least one PPP position.

2. The mobile device of claim 1, wherein the one or more position sources comprise one or more of:
• a wireless base station,
• a wireless Access Point, AP,
• an Ultra Wide Bandwidth, UWB, device,
• a Radio Frequency, RF, sensing device,
• a LIDAR device, or
• an Internet of Things, IoT, device.

3. The mobile device of claim 2, wherein the wireless base station provides Real Time Kinematics, RTK, position information.

4. The mobile device of claim 3, wherein the one or more processing units are further configured to determine an RTK position based on the RTK position information.

5. The mobile device of claim 1, wherein to obtain the position information, the one or more processing units are further configured to determine the position information using:
• Fifth Generation, 5G, signals,
• Ultra Wide Bandwidth, UWB, signals,
• WiFi signals,
• Fine Timing Measurements, FTM, or
• any combination thereof.

6. The mobile device of claim 1, wherein the position information is received by the mobile device in a Vehicle to Everything, V2X, message.

7. The mobile device of claim 1, wherein the one or more GNSS signals are multi-constellation and multi-band signals.

8. The mobile device of claim 1, wherein the uncertainty threshold is based on: a device type of the mobile device, an application type of an application executing on the mobile device, a requested accuracy by the mobile device, a requested accuracy by an application executing on the mobile device, a predetermined threshold, or any combination thereof.

9. The mobile device of claim 1, wherein the uncertainty threshold is between 10 and 30 centimeters or between 30 and 50 centimeters.

10. The mobile device of claim 1, wherein the Bayesian estimator comprises a Kalman filter, wherein to determine the one or more PPP positions, the one or more processing units are configured to constrain a covariance matrix associated with the Kalman filter, wherein to determine whether the one or more PPP positions meets or is below the one or more convergence thresholds, the one or more processing units are further configured to determine whether values of the covariance matrix have changed over a time window.

11. The mobile device of claim 1, wherein the Bayesian estimator comprises a particle filter, wherein to determine the one or more PPP positions, the one or more processing units are configured to use the position information to resample particles used by the particle filter.

12. The mobile device of claim 1, wherein to determine the position information, the one or more processing units are configured to:
obtain, by the mobile device, sensor data, wherein the sensor data comprises camera data, RF sensing data, LIDAR data or any combination thereof;
identify one or more physical features of one or more landmarks based on the sensor data; and
determine the position information based on one or more locations of the one or more physical features.

13. The mobile device of claim 1, wherein to determine the position information, the one or more processing units are configured to:
receive a message from a position source device, wherein the message is transmitted by the position source device in response to detection of the mobile device, wherein the message indicates an identifier of the position source device; and
determine the position information based on the message by retrieving a stored location of the position source device from a memory of the mobile device.

14. The mobile device of claim 1, wherein to obtain the position information, the one or more processing units are configured to:
determine whether to request the position information from one or more position source devices by selecting at least one position source device based on: an accuracy of position information provided by the at least one position source device, information that indicates that the position uncertainty of the position information provided by the at least one position source device meets or is below the uncertainty threshold, a cost of position information provided by the at least one position source device, or any combination thereof; and
in response to determining that the position information is to be requested, request the position information.

15. A method of determining a Precise Point Positioning, PPP, position, the method comprising:
obtaining (610), by a mobile device, one or more Global Navigation Satellite System, GNSS, signals;
obtaining (620), by the mobile device, position information based on one or more position sources, wherein the position information is indicative of a location of the mobile device;
in response to a position uncertainty of the position information meeting or being below an uncertainty threshold, determining (630) one or more Precise Point Positioning, PPP, positions of the mobile device based on the position information and the one or more GNSS signals, wherein determining a PPP position of the mobile device comprises using a Bayesian estimator to iteratively update a predicted location based on the one or more GNSS signals and using the obtained position information to constrain the predicted location of the mobile device;
determining (640) whether at least one PPP position meets or is below one or more convergence thresholds; and
in response to determining that at least one PPP position meets or is below the one or more convergence thresholds, providing (650) the at least one PPP position.

## Patentansprüche

1. Mobilgerät zur Bestimmung einer PPP-(Precise Punkt Positioning)-Position, wobei das Mobilgerät Folgendes umfasst:
einen GNSS-(Global Navigation Satellite System)-Empfänger;
einen Speicher; und
eine oder mehrere Verarbeitungseinheiten, die mit dem GNSS-Empfänger und dem Speicher kommunikativ gekoppelt sind, wobei die ein oder mehreren Verarbeitungseinheiten konfiguriert sind zum:
Erhalten (610), über den GNSS-Empfänger, eines oder mehrerer GNSS-Signale;
Erhalten (620) von Positionsinformationen auf der Basis von einer oder mehreren Positionsquellen, wobei die Positionsinformationen einen Standort des Mobilgeräts angeben;
Bestimmen (630), als Reaktion darauf, dass eine Positionsunsicherheit der Positionsinformationen einen Unsicherheitsschwellenwert erreicht oder unterschreitet, einer oder mehrerer PPP-Positionen des Mobilgeräts auf der Basis der erhaltenen Positionsinformationen und der ein oder mehreren GNSS-Signale, wobei das Bestimmen einer PPP-Position des Mobilgeräts das Verwenden eines Bayes'schen Schätzers zum iterativen Aktualisieren eines vorhergesagten Standorts auf der Basis der ein oder mehreren GNSS-Signale und das Verwenden der erhaltenen Positionsinformationen zum Einschränken des vorhergesagten Standorts des Mobilgeräts beinhaltet;
Feststellen (640), ob mindestens eine PPP-Position einen oder mehrere Konvergenzschwellenwerte erreicht oder unterschreitet; und
Bereitstellen (650), als Reaktion auf die Feststellung, dass mindestens eine PPP-Position die ein oder mehreren Konvergenzschwellenwerte erreicht oder unterschreitet, der mindestens einen PPP-Position.

2. Mobilgerät nach Anspruch 1, wobei die ein oder mehreren Positionsquellen eines oder mehrere umfassen von:
• einer drahtlosen Basisstation,
• einem drahtlosen AP (Access Point),
• einem UWB-(Ultra Wide Bandwidth)-Gerät,
• einem RF-(Radio Frequency)-Erfassungsgerät,
• einem LIDAR-Gerät und
• einem IoT-(Internet of Things)-Gerät.

3. Mobilgerät nach Anspruch 2, wobei die drahtlose Basisstation RTK-(Real Time Kinematics)-Positionsinformationen bereitstellt.

4. Mobilgerät nach Anspruch 3, wobei die ein oder mehreren Verarbeitungseinheiten ferner zum Bestimmen einer RTK-Position auf der Basis der RTK-Positionsinformationen konfiguriert sind.

5. Mobilgerät nach Anspruch 1, wobei zum Erhalten der Positionsinformationen die ein oder mehreren Verarbeitungseinheiten ferner konfiguriert sind zum Bestimmen der Positionsinformationen anhand von:
• 5G-(Fifth Generation)-Signalen,
• UWB-(Ultra Wide Bandwidth)-Signalen,
• WiFi-Signalen,
• FTM (Fine Timing Measurements) oder
• einer beliebigen Kombination davon.

6. Mobilgerät nach Anspruch 1, wobei die Positionsinformationen vom Mobilgerät in einer V2X-(Vehicle-to-Everything)-Nachricht empfangen werden.

7. Mobilgerät nach Anspruch 1, wobei die ein oder mehreren GNSS-Signale Multikonstellations- und Multiband-Signale sind.

8. Mobilgerät nach Anspruch 1, wobei der Unsicherheitsschwellenwert basiert auf: einem Gerätetyp des Mobilgeräts, einem Anwendungstyp einer auf dem Mobilgerät ausgeführten Anwendung, einer vom Mobilgerät angeforderten Genauigkeit, einer von einer auf dem Mobilgerät ausgeführten Anwendung angeforderten Genauigkeit, einem vorbestimmten Schwellenwert oder einer beliebigen Kombination davon.

9. Mobilgerät nach Anspruch 1, wobei der Unsicherheitsschwellenwert zwischen 10 und 30 Zentimetern oder zwischen 30 und 50 Zentimetern liegt.

10. Mobilgerät nach Anspruch 1, wobei der Bayes'sche Schätzer einen Kalman-Filter umfasst, wobei zum Bestimmen der ein oder mehreren PPP-Positionen die ein oder mehreren Verarbeitungseinheiten zum Einschränken einer mit dem Kalman-Filter assoziierten Kovarianzmatrix konfiguriert sind, wobei zum Feststellen, ob die ein oder mehreren PPP-Positionen die ein oder mehreren Konvergenzschwellenwerte erfüllen oder unterschreiten, die ein oder mehreren Verarbeitungseinheiten ferner konfiguriert sind zum Feststellen, ob sich die Werte der Kovarianzmatrix über ein Zeitfenster hinweg geändert haben.

11. Mobilgerät nach Anspruch 1, wobei der Bayes'sche Schätzer einen Partikelfilter umfasst, wobei zum Bestimmen der ein oder mehreren PPP-Positionen die ein oder mehreren Verarbeitungseinheiten zum Verwenden der Positionsinformationen zum Resampeln von vom Partikelfilter verwendeten Partikeln konfiguriert sind.

12. Mobilgerät nach Anspruch 1, wobei zum Bestimmen der Positionsinformationen die ein oder mehreren Verarbeitungseinheiten konfiguriert sind zum:
Erhalten, durch das Mobilgerät, von Sensordaten, wobei die Sensordaten Kameradaten, RF-Sensordaten, LIDAR-Daten oder eine beliebige Kombination davon umfassen;
Identifizieren eines oder mehrerer physikalischer Merkmale eines oder mehrerer Orientierungspunkte auf der Basis der Sensordaten; und
Bestimmen der Positionsinformationen auf der Basis von einem oder mehreren Standorten der ein oder mehreren physikalischen Merkmale.

13. Mobilgerät nach Anspruch 1, wobei zum Bestimmen der Positionsinformationen die ein oder mehreren Verarbeitungseinheiten konfiguriert sind zum:
Empfangen einer Nachricht von einem Positionsquellengerät, wobei die Nachricht von dem Positionsquellengerät als Reaktion auf die Erkennung des Mobilgeräts übertragen wird, wobei die Nachricht eine Kennung des Positionsquellengeräts angibt; und
Bestimmen der Positionsinformationen auf der Basis der Nachricht durch Abrufen eines gespeicherten Standorts des Positionsquellengeräts aus einem Speicher des Mobilgeräts.

14. Mobilgerät nach Anspruch 1, wobei zum Erhalten der Positionsinformationen die ein oder mehreren Verarbeitungseinheiten konfiguriert sind zum:
Feststellen, ob die Positionsinformationen von einem oder mehreren Positionsquellgeräten angefordert werden sollen, durch Auswählen mindestens eines Positionsquellgeräts auf der Basis von: einer Genauigkeit der von dem mindestens einen Positionsquellengerät bereitgestellten Positionsinformationen, Informationen, die angeben, dass die Positionsunsicherheit der von dem mindestens einen Positionsquellengerät bereitgestellten Positionsinformationen den Unsicherheitsschwellenwert erfüllt oder unterschreitet, den Kosten der von dem mindestens einen Positionsquellengerät bereitgestellten Positionsinformationen, oder einer beliebigen Kombination davon; und
Anfordern der Positionsinformationen als Reaktion auf die Feststellung, dass die Positionsinformationen angefordert werden sollen.

15. Verfahren zum Bestimmen einer PPP-(Precise Point Positioning)-Position, wobei das Verfahren Folgendes beinhaltet:
Erhalten (610), durch ein Mobilgerät, eines oder mehrerer GNSS-Signale;
Erhalten (620), durch das Mobilgerät, von Positionsinformationen auf der Basis von einer oder mehreren Positionsquellen, wobei die Positionsinformationen einen Standort des Mobilgeräts angeben;
Bestimmen (630), als Reaktion darauf, dass eine Positionsunsicherheit der Positionsinformationen einen Unsicherheitsschwellenwert erreicht oder unterschreitet, einer oder mehrerer PPP-Positionen des Mobilgeräts auf der Basis der erhaltenen Positionsinformationen und der ein oder mehreren GNSS-Signale, wobei das Bestimmen einer PPP-Position des Mobilgeräts das Verwenden eines Bayes'schen Schätzers zum iterativen Aktualisieren eines vorhergesagten Standorts auf der Basis der ein oder mehreren GNSS-Signale und das Verwenden der erhaltenen Positionsinformationen zum Einschränken des vorhergesagten Standorts des Mobilgeräts beinhaltet;
Feststellen (640), ob mindestens eine PPP-Position einen oder mehrere Konvergenzschwellenwerte erreicht oder unterschreitet; und
Bereitstellen (650), als Reaktion auf die Feststellung, dass mindestens eine PPP-Position die ein oder mehreren Konvergenzschwellenwerte erreicht oder unterschreitet, der mindestens einen PPP-Position.

## Revendications

1. Dispositif mobile pour la détermination d'une position par positionnement ponctuel précis, PPP, le dispositif mobile comprenant :
un récepteur de système mondial de navigation par satellite, GNSS ;
une mémoire ; et
une ou plusieurs unités de traitement couplées en communication au récepteur GNSS et à la mémoire, les une ou plusieurs unités de traitement étant configurées pour :
obtenir (610), via le récepteur GNSS, un ou plusieurs signaux GNSS ;
obtenir des informations de position (620) sur la base d'une ou plusieurs sources de position, dans lequel les informations de position sont indicatives d'un emplacement du dispositif mobile ;
en réponse à une incertitude de position des informations de position égale ou inférieure à un seuil d'incertitude, déterminer (630) une ou plusieurs positions PPP du dispositif mobile sur la base des informations de position obtenues et des un ou plusieurs signaux GNSS, dans lequel la détermination d'une position PPP du dispositif mobile comprend l'utilisation d'un estimateur bayésien pour mettre à jour itérativement un emplacement prédit sur la base des un ou plusieurs signaux GNSS et l'utilisation des informations de position obtenues pour contraindre l'emplacement prédit du dispositif mobile ;
déterminer (640) qu'au moins une position PPP est égale ou inférieure à un ou plusieurs seuils de convergence ; et
en réponse à la détermination qu'au moins une position PPP est égale ou inférieure aux un ou plusieurs seuils de convergence, fournir (650) l'au moins une position PPP.

2. Dispositif mobile selon la revendication 1, dans lequel les une ou plusieurs sources de position comprennent une ou plusieurs des sources suivantes :
• une station de base sans fil,
• un point d'accès sans fil, AP,
• un dispositif à bande passante ultra large, UWB,
• un dispositif de détection de radiofréquence, RF,
• un dispositif LIDAR, ou
• un dispositif de l'Internet des Objets, IoT.

3. Dispositif mobile selon la revendication 2, dans lequel la station de base sans fil fournit des informations de position par cinématique en temps réel, RTK.

4. Dispositif mobile selon la revendication 3, dans lequel les une ou plusieurs unités de traitement sont configurées en outre pour déterminer une position RTK sur la base des informations de position RTK.

5. Dispositif mobile selon la revendication 1, dans lequel, pour obtenir les informations de position, les une ou plusieurs unités de traitement sont configurées en outre pour déterminer les informations de position à l'aide de :
• signaux de cinquième génération, 5G,
• signaux de bande passante ultra large, UWB,
• signaux WiFi,
• mesures de synchronisation fine, FTM ou
• toute combinaison de ceux-ci.

6. Dispositif mobile selon la revendication 1, dans lequel les informations de position sont reçues par le dispositif mobile dans un message de Véhicule à Tout, V2X.

7. Dispositif mobile selon la revendication 1, dans lequel les un ou plusieurs signaux GNSS sont des signaux multi-constellations et multi-bandes.

8. Dispositif mobile selon la revendication 1, dans lequel le seuil d'incertitude est basé sur : un type de dispositif du dispositif mobile, un type d'application d'une application exécutée sur le dispositif mobile, une précision demandée par le dispositif mobile, une précision demandée par une application exécutée sur le dispositif mobile, un seuil prédéterminé, ou toute combinaison de ceux-ci.

9. Dispositif mobile selon la revendication 1, dans lequel le seuil d'incertitude est compris entre 10 et 30 centimètres ou entre 30 et 50 centimètres.

10. Dispositif mobile selon la revendication 1, dans lequel l'estimateur bayésien comprend un filtre de Kalman, dans lequel pour déterminer les une ou plusieurs positions PPP, les une ou plusieurs unités de traitement sont configurées pour contraindre une matrice de covariance associée au filtre de Kalman, dans lequel pour déterminer que les une ou plusieurs positions PPP sont ou non égales ou inférieures aux un ou plusieurs seuils de convergence, les une ou plusieurs unités de traitement sont configurées pour déterminer que des valeurs de la matrice de covariance ont changé au cours d'une fenêtre temporelle.

11. Dispositif mobile selon la revendication 1, dans lequel l'estimateur bayésien comprend un filtre à particules, dans lequel pour déterminer les une ou plusieurs positions PPP, les une ou plusieurs unités de traitement sont configurées pour utiliser les informations de position afin de rééchantillonner les particules utilisées par le filtre à particules.

12. Dispositif mobile selon la revendication 1, dans lequel, pour déterminer les informations de position, les une ou plusieurs unités de traitement sont configurées pour :
obtenir, par le dispositif mobile, des données de capteur, dans lequel les données de capteur comprennent des données de caméra, des données de détection RF, des données LIDAR ou toute combinaison de celles-ci ;
identifier une ou plusieurs caractéristiques physiques d'un ou plusieurs points de repère sur la base des données de capteur ; et
déterminer les informations de position sur la base d'un ou plusieurs emplacements des une ou plusieurs caractéristiques physiques.

13. Dispositif mobile selon la revendication 1, dans lequel, pour déterminer les informations de position, les une ou plusieurs unités de traitement sont configurées pour :
recevoir un message depuis un dispositif de source de position, dans lequel le message est transmis par le dispositif de source de position en réponse à la détection du dispositif mobile, dans lequel le message indique un identifiant du dispositif de source de position ; et
déterminer les informations de position sur la base du message en récupérant un emplacement stocké du dispositif de source de position à partir d'une mémoire du dispositif mobile.

14. Dispositif mobile selon la revendication 1, dans lequel, pour obtenir les informations de position, les une ou plusieurs unités de traitement sont configurées pour :
déterminer qu'il convient ou non de demander les informations de position à un ou plusieurs dispositifs sources de position en sélectionnant au moins un dispositif de source de position sur la base : d'une exactitude d'informations de position fournies par l'au moins un dispositif de source de position, d'informations qui indiquent que l'incertitude de position des informations de position fournies par l'au moins un dispositif de sources de position est égale ou inférieure au seuil d'incertitude, d'un coût des informations de position fournies par l'au moins un dispositif de source de position, ou toute combinaison de ceux-ci ; et
en réponse à la détermination qu'il convient de demander les informations de position, demander les informations de position.

15. Procédé de détermination d'une position par positionnement ponctuel précis, PPP, le procédé comprenant :
l'obtention (610), par un dispositif mobile, d'un ou plusieurs signaux de système mondial de navigation par satellite, GNSS ;
l'obtention (620), par le dispositif mobile, d'informations de position sur la base d'une ou plusieurs sources de position, dans lequel les informations de position sont indicatives d'un emplacement du dispositif mobile ;
en réponse à une incertitude de position des informations de position égale ou inférieure à un seuil d'incertitude, la détermination (630) d'une ou plusieurs positions de positionnement ponctuel précis, PPP, du dispositif mobile sur la base des informations de position et des un ou plusieurs signaux GNSS, dans lequel la détermination d'une position PPP du dispositif mobile comprenant l'utilisation d'un estimateur bayésien pour mettre à jour itérativement un emplacement prédit sur la base des un ou plusieurs signaux GNSS et l'utilisation des informations de position pour contraindre l'emplacement prédit du dispositif mobile ;
la détermination (640) qu'au moins une position PPP est égale ou inférieure à un ou plusieurs seuils de convergence ; et
en réponse à la détermination qu'au moins une position PPP est égale ou inférieure aux un ou plusieurs seuils de convergence, la fourniture (650) de l'au moins une position PPP.
